# EUROPÄISCHE PATENTSCHRIFT

(11) **EP 1 883 662 B1**
(45) Veröffentlichungstag und Bekanntmachung des Hinweises auf die Patenterteilung: **05.11.2008**
(21) Anmeldenummer: 06753691.2
(22) Anmeldetag: 17.05.2006
(51) Int. Cl.: C08F 222/10, C08F 222/36, C08F 222/40, C08F 230/02, C04B 24/24

(54) **COPOLYMERE AUF BASIS VON PHOSPHOR-HALTIGEN MONOMEREN, VERFAHREN ZU IHRER HERSTELLUNG SOWIE DEREN VERWENDUNG**
COPOLYMERS BASE ON PHOSPHOROUS-CONTAINING MONOMERS, METHODS FOR THE PRODUCTION THEREOF AND THEIR USE
COPOLYMERES A BASE DE MONOMERES CONTENANT DU PHOSPHORE, PROCEDES DE PRODUCTION ET UTILISATION ASSOCIES

(30) Priorität: 18.05.2005 DE 102005022843
(43) Veröffentlichungstag der Anmeldung: 06.02.2008
(73) Patentinhaber: Construction Research and Technology GmbH, 83308 Trostberg (DE)
(72) Erfinder: EINFELDT, Lars, 07743 Jena (DE); KRAUS, Alexander, 83552 Evenhausen (DE); ALBRECHT, Gerhard, 83342 Tacherting (DE); BRANDL, Martina, 83278 Traunstein (DE); HARTL, Angelika, 83342 Tacherting (DE)
(74) Vertreter: Dey, Michael
(86) Internationale Anmeldenummer: PCT/EP2006/004691
(87) Internationale Veröffentlichungsnummer: WO 2006/122793

(56) Entgegenhaltungen:
- EP-A- 1 110 981
- WO-A-00/77058
- WO-A-01/58579
- WO-A-20/05019288

## Beschreibung

Die vorliegende Erfindung betrifft Copolymere auf Basis von Phosphor-haltigen Monomeren, Verfahren zu ihrer Herstellung sowie deren Verwendung als Zusatzmittel für anorganische Bindemittelsuspensionen auf Basis von Zement, Kalk, Gips und Anhydrit.

Nach einer weithin akzeptierten Theorie beruht die Wirksamkeit von Fließmitteln für zementäre Bindemittelsuspensionen im Wesentlichen auf zwei Effekten. So adsorbieren die negativ geladenen Säuregruppen der Fließmittel auf der durch Calciumionen positiv geladenen Zementkornoberfläche. Die so entstandene elektrostatische Doppelschicht (Zeta-Potential) führt zu einer elektrostatischen Abstoßung zwischen den Partikeln. Die durch die Zeta-Potentiale verursachten Abstoßungskräfte haben jedoch nur geringe Reichweiten [vgl. H. Uchikawa, "Cem.Concr.Res." 27 (1997) 37-50]. Die Adsorption des Fließmittels verhindert jedoch auch, dass die Oberflächen der Zementpartikel in direkten Kontakt miteinander kommen können. Dieser sterische Abstoßungseffekt wird bei Verwendung entsprechender Kammpolymere durch die nicht-adsorbierten Seitenketten drastisch verstärkt [vgl. K.Yoshioka, "J.Am.Ceram.Soc." 80 (1997) 2667-71]. Es liegt auf der Hand, dass sich der sterisch bedingte Abstoßungseffekt sowohl durch die Länge der Seitenketten, als auch durch die Anzahl der Seitenketten pro Hauptkette beeinflussen lässt. Andererseits kann eine zu hohe Seitenkettendichte bzw. -länge die Adsorption auf der Zementkornoberfläche behindern.

Auf Grundlage dieser Kenntnisse wurden in den letzten 10 Jahren eine Vielzahl von Fließmitteln auf der Basis von Polyethercarboxylaten entwickelt (WO 99/47 468 A1, WO 97/00 898 A1, EP 1 437 330 A1, EP 0 924 174 A1, EP 0 850 894 A1, EP 0 838 444 A1, EP 0 870 784 A1, EP 0 753 488 A1, US 6,267,814 B1, US 5,707,445 B1, US 5,703,174 B1, DE 199 26 611 A1, DE 198 34 173 A1, DE 195 13 126 A1).

Die kammartigen Copolymere aus Poly(alkylenglycol)-haltigen Acrylaten/Methacrylaten zeichnen sich dadurch aus, dass eine statistische Verteilung der einzelnen Monomere entlang der Polymerkette vorliegt. Eine solche Verteilung entlang des Polymerrückgrates schließt allerdings nicht aus, dass (polymerisationsbedingt) mehr oder weniger häufig Domänen existieren können, die auf Homopolymerisaten des einen oder anderen Monomeren (oder weiterer Monomere) beruhen. Mit anderen Worten, streng alternierende Copolymere sind auf diesem Wege nicht erhältlich, so dass stets eine mehr oder minder große Uneinheitlichkeit dieser Copolymere vorliegt.

Diese kammartigen Copolymere entsprechend dem Stand der Technik weisen zwar gute wasserreduzierende Eigenschaften in wässrigen mineralischen Bindemittelsuspensionen auf, doch kann mit diesen Copolymeren eine Fließfähigkeit des Betons nur über einen vergleichsweise geringen Zeitraum auf konstantem Niveau gehalten werden.

Der vorliegenden Erfindung lag daher die Aufgabe zugrunde, Copolymere auf Basis von Phosphor-haltigen Monomeren und deren Verwendung als Zusatzmittel für anorganische Bindemittel-Suspensionen zu entwickeln, wobei die entsprechenden Copolymere nicht die genannten Nachteile entsprechend dem Stand der Technik aufweisen, sondern als Fließmittel sowohl gute wasserreduzierende Eigenschaften besitzen (ohne die Verflüssigung bspw. des Betons zu beeinträchtigen) als auch die Fließfähigkeit des Betons über einen möglichst langen Zeitraum (60 - 90 min) auf nahezu unverändertem Niveau halten, ohne verzögernd zu wirken (sog. "slump retainer").

Diese Aufgabe wurde erfindungsgemäß dadurch gelöst, dass man Copolymere auf Basis von Phosphor-haltigen Monomeren (A) der Formeln (Ia) und/oder (Ib) und Makromonomeren (B) der allgemeinen Formel (II) gemäß Anspruch 1 einsetzt.

Es hat sich nämlich überraschenderweise gezeigt, dass sich die entsprechenden Copolymere sehr gut als Zusatzmittel für mineralische Bindemittelsuspensionen eignen, wobei diese Zusatzmittel sowohl als ausgezeichnetes Fließmittel ("superplasticizer") und/oder "slump retainer" eingesetzt werden können. Außerdem verbessern die entsprechenden polymeren Zusatzmittel die Verarbeitungs- und Erhärtungsprozesse der mit diesen Zusatzmitteln hergestellten Baustoffe, indem sie frühere und höhere Druckfestigkeiten ermöglichen.

Die erfindungsgemäßen Copolymere leiten sich ab von Phosphor-haltigen Monomeren (A) und Makromonomeren (B). Die Phosphor-haltigen Monomere
(A) entsprechen den allgemeinen Formeln (Ia) oder (Ib) 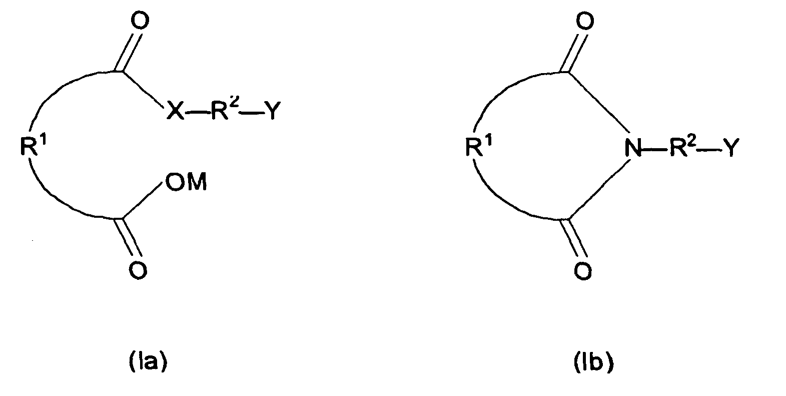 mit
   - R¹ =: 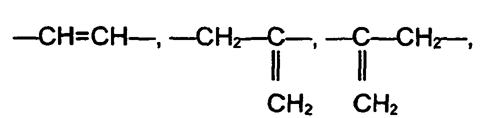 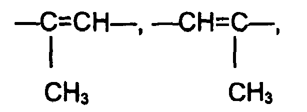
   - X =: O, S, NH, N-R²-Y,
   - R² =: C₁-C₂₀-(Hetero-)Alkylenreste ggf. mit O- oder N-Heteroatomen, die linear oder verzweigt sind und ggf. noch 1 bis 10 Substituenten ausgewählt aus der Gruppe OH, OPO₃M₂, OPHO₂M, NH₂, NH-CH₂PO₃M₂, N(CH₂-PO₃M₂)₂, CZ(PO₃M₂)₂ aufweisen, sowie C₆-C₁₀-Arylenreste,
   - Y =: -N(CH₂-PO₃M₂)₂, -CZ(PO₃M₂)₂, -OPHO₂M, -OPO₃M₂,
   - Z =: H, Hal, OH, NH₂,
   - Hal =: F, Cl, Br, J,
   - M =: H, Na, K, NH₄, N(R³)₄
   - R³ =: C₁-C₁₂-Alkylreste, bevorzugt C₁-C₈-Alkylreste sowie C₆-C₁₀-Arylreste.

Die entsprechenden Monomere (A) bestehen zum einen aus einer elektronenarmen vinylischen Bindung auf der Basis von Maleinsäure-, Itaconsäure- oder Citraconsäure-Derivaten, zum anderen besitzen sie einen Phosphor-haltigen anionischen Rest auf der Basis von Phosphonat-, Phosphit- oder Phosphat-haltigen Gruppierungen.

Entsprechend der allgemeinen Formel (Ia) handelt es sich hierbei um die Halbester (X = O, S) bzw. Halbamide (X = HN, N-R²-Y) der entsprechenden Dicarbonsäure-Derivate oder gemäß Formel (Ib) um die entsprechenden cyclischen Imide.

Die Phosphor-haltigen anionischen Reste sind über geeignete (Hetero-) Alkylen- oder Arylen-Spacer (bspw. R²) an die ungesättigten Dicarbonsäure-Derivate gebunden.

Bei den diesbezüglichen Resten R² handelt es sich um C₁-C₂₀-Alkylen- oder Heteroalkylenreste (mit O- oder N-Heteroatomen), die linear oder verzweigt sein können, oder um C₆-C₁₀-Arylenreste (wie z. B. Phenylen oder Naphthylen). In einer bevorzugten Ausführungsform handelt es sich um C₁-C₁₀-Alkylen- oder Heteroalkylenreste.

Die C₁-C₂₀- bzw. C₁-C₁₀-(Hetero)Alkylen-Reste können ggf. noch 1 bis 10 Substituenten ausgewählt aus der Gruppe OH, OPO₃M₂, OPHO₂M, NH₂, NH-CH₂PO₃M₂, N(CH₂-PO₃M₂)₂ sowie CZ(PO₃M₂)₂ aufweisen, wobei Z = H, Hal, OH, NH₂ sowie Hal = F, Cl, Br, J und M = H, Na, K, NH₄, N(R³)₄ (R³ = C₁-C₁₂-Alkylreste und C₆-C₁₀-Arylreste) bedeuten.

Die Herstellung der Monomere (A) kann in technisch sehr einfacher Weise dadurch erfolgen, dass man ungesättigte Dicarbonsäure-Derivate der allgemeinen Formel (VI) 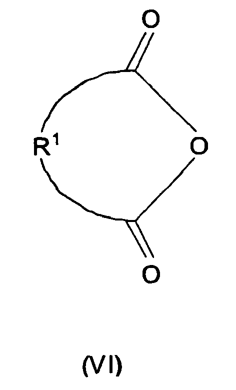 mit Phosphor-haltigen Verbindungen der allgemeinen Formel (VII)

HX=R²-Y (VII)

(wobei R¹, R², X und Y oben genannte Bedeutung besitzen) bei Temperaturen von 0 bis 100 °C reagieren lässt, wobei diese Umsetzung sowohl kontinuierlich als auch diskontinuierlich durchgeführt werden kann.

Als ungesättigtes Dicarbonsäure-Anhydrid gemäß Formel (VI) werden Maleinsäure-, Itaconsäure- und Citraconsäure eingesetzt.

Die in Formel (VII) dargestellten Phosphonat-, Phosphit- und Phosphat-Bausteine sind Stand der Technik und können nach vielen Varianten gewonnen werden:
A) Methylphosphonierung von Aminen (US 3,288,846, US 4,235,890).
B) Phosphonierung von Carbonsäuren und deren Abkömmlinge wie z. B. Säurechloride, -amide oder Nitrile (US 4,239,695, US 4,100,167, US 3,799,758, US 3,400,149, DE 27 45 084, DE 25 34 391, DE 21 30 794, DE 197 37 923, DE 16 18 788, DE 11 48 551).
C) Phosphatierung von Alkoholen und Ethern (Houben-Weyl, Band E2 (1982), M.Regitz (Hrsg.), S.491 ff. und darin zitierte Literatur, SU 178 819, SU 178 374).
D) Phosphite aus Alkoholen und Ethern (Houben-Weyl, Band E1 (1982), M.Regitz (Hrsg.), S.313 ff. und darin zitierte Literatur, insbesondere GB 940 697)

Die verfahrenstechnisch interessanteste Lösung stellt jedoch die Phosphatierung von Alkoholen dar (SU 196 817). Erfindungsgemäß können mit dieser Vorgehensweise auch Amino-haltige Alkohole phosphatiert werden. So können die technisch bedeutsamsten Aminoalkohole, wie Aminoethanol *[CAS 141-43-5]*, Diethanolamin *[CAS 111-42-2]*, oder Tris(hydroxymethyl)-aminomethan (TRIS) *[CAS 77-86-1]*, die mit 85%-iger Phosphorsäure in o-Xylol gelöst bzw. suspendiert wurden, durch die Abtrennung des Wassers mittels azeotroper Destillation an einem Wasserabscheider direkt an der Hydroxylgruppe phosphatiert werden. Aber auch andere kommerziell erhältliche Aminoalkohole, wie Aminohexanol *[CAS 4048-33-3]*, 2-Aminoethoxy-ethanol *[CAS 929-06-6]*, 4-Amino-benzylalkohol *[CAS 623-04-1]*, N-(2-Aminoethyl)diethylenolamin *[CAS 3197-06-6]*, N-(3-Aminopropyl)diethanolamin *[CAS 4985-85-7]* lassen sich auf diese Art und Weise mit überraschend hohen Ausbeuten phosphatieren (Tabelle 1). Aufgrund der hohen Sauerstoffaffinität des Phosphors findet eine Umsetzung an der Aminogruppe nicht statt. Die Bildung von Phosphorsäure-diestern ist ebenfalls vernachlässigbar gering. Die Phosphatierung von AminoalkyllArylalkoholen mit Phosphorsäure ist zwar im Allgemeinen beschrieben (z. B. von Aminoethanol, DE 930 566, GB 684 977), jedoch sind unter Verwendung von fast equimolaren Mengen konzentrierter Phosphorsäure ein solch hoher Umsetzungsgrad und eine solch geringe Phosphorsäurediester-Bildung bislang unbekannt (Tabelle 1).

**Tabelle 1**

| Phosphatierung verschiedener Aminoalkohole in o-Xylol bei Raumtemperatur | | |
|---|---|---|
| Edukt (Aminoalkohol) | H₃PO₄ | Phosphatierungsgrad^{(a)(b)} |
| Aminoethanol (AE) | 1.1 eq. | 93 ± 2% |
| 2-Aminoethoxy-ethanol (AEE) | 1.1 eq. | 87 ± 6% |
| Aminohexanol (AH) | 1.1 eq. | 80 ± 1 % |
| 4-Aminobenzylalcohol (ABA) | 1.1 eq. | ∼90%^{(c)} |
| Diethanolamin (DEA) | 2.2 eq. | 93% |
| N-(3-Aminopropyl)-diethanolamin (APDEA) | 2.2 eq. | 92% |
| Tris(hydroxymethyl)-aminomethan (TRIS) | 3.2 eq. | 86 ± 1 % |

| | | |
|---|---|---|
| (a) Phosphatierungsgrad (PG) = Prozentuale Menge der phosphatierten Hydroxylgruppen (b) Die Bestimmung des PG erfolgte mit Hilfe der 1 H-NMR (D₂O). (c) Der PG wurde mittels HPLC ermittelt. | | |

Die Ankopplung dieser Phosphor-haltigen Verbindungen an vinylhaltige Anhydride - beispielsweise der Maleinsäure, Itaconsäure oder Citraconsäure - erfolgt im Besonderen über eine Veresterung oder Amidierung. Dazu erforderlich ist das Vorhandensein mindestens einer "freien" NH-, SH- oder OH-Funktion in diesen Phosphor-haltigen Verbindungen entsprechend Formel (VII) (X = O, S, N).

Die Umsetzung der Dicarbonsäureanhydride gemäß Formel (II) mit den Phosphor-haltigen Verbindungen gemäß Formel (III) erfolgt vorzugsweise in wässriger Lösung oder einem Gemisch von Wasser und einem C₁-C₄- Alkohol oder Wasser und Aceton. Dabei wird der pH-Wert während der Reaktion vorzugsweise < pH 7 gehalten. Unter diesen Bedingungen werden keine Nebenreaktionen, wie z.B. Michael-Addition der NH-Gruppe an die vinylische Doppelbindung des Säureanhydrids, beobachtet.

Je nach Reaktivität der NH-, SH- oder OH-Funktion in diesen Phosphor-haltigen Verbindungen kann equimolar oder mit einem (geringen) Überschuss an Säureanhydrid gearbeitet werden. Zur pH-Steuerung kann prinzipiell jede Base oder Lauge verwendet werden. Bevorzugt sind allerdings NaOH, KOH, Ammoniak oder andere Amine.

Die hohen Umsetzungsgrade bei der Kopplung der Phosphor-haltigen Verbindungen an vinylische Anhydride sind am Beispiel der Amidierung von Maleinsäureanhydrid (MSA) mit phosphatierten Aminoalkoholen in Tabelle 2 zusammengefasst.

**Tabelle 2**

| Amidierung von MSA mit verschiedenen, phosphatierten Aminoalkoholen in H₂O | | | | |
|---|---|---|---|---|
| Molare Zusammensetzung der Edukte | | Produktzusammensetzung (Ausbeute) | | |
| Phosphatierter Aminoalkohol | MSA- | Amide^{(a) (b)} | Phosphorenthaltende | Edukt^{(d)} |
| (1.0 eq.) | Gehalt | (Gesamt) | Amide^{(c)} | (Amine) |
| Aminoethanol-phosphat | 1.0 eq. | 85 ± 1 % | 58-79% | 15 ± 1% |
| Aminoethanol-phosphat | 1.1-1.2 eq. | 98 ± 1% | 90-92% | -1 % |
| (2-Aminoethoxy)ethanol-phosphat | 1.2 eq. | 91 ± 5% | n.b.^{(e)} | 9 ± 5% |
| Aminohexanol-phosphat | 2.0 eq. | 93% | 74% | 7% |
| N-(3-Aminopropyl)diethanolaminphosphat | 1.5 eq_{.} | 91% | n.b.^{(e)} | 9% |
| Diethanolamin-diphosphat | 1.0 eq. | 82 ± 8% | 50-83% | 18 ± 8% |
| Diethanolamin-diphosphat | 2.0-2.5 eq. | 95 ± 4% | 90-96% | 5 ± 4% |

| | | | | |
|---|---|---|---|---|
| (a) Die Bestimmung des gesamten Gehalts an MS-amid erfolgte durch 1 H-NMR (D₂O). (b) Der Gehalt setzt sich aus Phosphor-enthaltenden MS-amid und Amid aus MS + Aminoalkohol zusammen. (c) Anteil des Phosphor-enthaltenden MS-amid vom gesamten Gehalt an MS-amid (d) Anteil der "freien" Amine: Unumgesetzte phosphatierte Aminoalkohole + Aminoalkohol-Reste (e) n.b. = nicht bestimmbar, da eine Unterscheidung zwischen Phosphor-enthaltenden Amid und dem Amid aus rückständigen Aminoalkohol bei diesem Produkt mit Hilfe der 1 H-NMR nicht möglich ist | | | | |

Prinzipiell kann man bei den Produkten auch zwischen Phosphor-haltigem Maleinsäureamid und Maleinsäureamid aus reinem Aminoalkohol unterscheiden (Tabelle 2). Das Verhältnis zwischen beiden Amiden spiegelt im Wesentlichen den Phosphatierungsgrad der Aminoalkohole wieder, d. h., je höher die Phosphatierung des Aminoalkohols ist, desto größer ist der Anteil an Phosphor-haltigem Maleinsäureamid.

Die Herstellung von Phosphor-haltigen Maleinsäureimiden der allgemeinen Formel (Ib) kann durch Dehydratisierung der Maleinsäureamide mit Acetanhydrid/wasserfreiem Natriumacetat oder Triethylamin erfolgen, wobei die entsprechenden Maleinsäureimide mit N-substituierten Hydroxyalkylenverbindungen erhalten werden. Entsprechende Synthesen mit primären Aminen und unterschiedlichstem sterischen Anspruch sind bereits beschrieben [Wang "Synth. Commun." 20 (1990), 1607 bzw. Braish & Fox "Synlett" (1992), 979]. Aber auch andere effektive Methoden - beispielsweise unter Verwendung entsprechender Alkyl-/Aryl-ammoniumsulfate oder -phosphate der Alkyl-/Arylamine als Katalysatoren [EP 0 257 831, Kita & Kishino "Catalysis Surveys" 2 (1998), 187] oder unter Verwendung von Ionenaustauschern (US 4,812,579) - sind bekannt.

Des Weiteren lassen sich diese Maleinsäureimid-Derivate ebenfalls unter recht milden Bedingungen erzeugen, wenn Maleinsäureamid zuvor durch eine Diels-Alder-Reaktion mit Furan zu den so genannten Maleinsäureamid-Furan-Addukten umgesetzt wird. Auf diese Art und Weise lässt sich beispielsweise mit Aminoethanol das N-Hydroxyethyl-maleimid *[CAS 1585-90-6]* in sehr reiner, kristalliner Form herstellen (FR 2 031 538, WO 98/07 759, WO 01/68 601). Aber auch andere N-Hydroxyalkyl-/Aryl-maleimide lassen sich mit Hilfe dieser Furan-Schutzgruppe darstellen (US 2004 014,933).

Im Anschluss daran lassen sich solche N-Hydroxyalkyl-/Aryl-maleimide analog nach bekannten Methoden mit Phosphorsäure oder seinen Anhydriden zu entsprechenden Phosphaten (Houben-Weyl, Band E2 (1982), M.Regitz (Hrsg.), S.491 ff.) bzw. mit Phosphoriger Säure oder seinen Anhydriden zu den Phosphiten umsetzen (Houben-Weyl, Band E1 (1982), M.Regitz (Hrsg.), S.313 ff.) und können somit als Phosphor-haltige Monomere fungieren.

Da die Phosphor-haltigen Monomere (A) eine überwiegend elektronenarme Funktionalität besitzen, benötigen diese als Polymerisationspartner vor allem elektronenreiche Comonomere.

Als Comonomere werden entsprechend der vorliegenden Erfindung Makromonomere (B) der allgemeinen Formel (II) eingesetzt, die Polyalkylenoxid-Strukturen aufweisen: 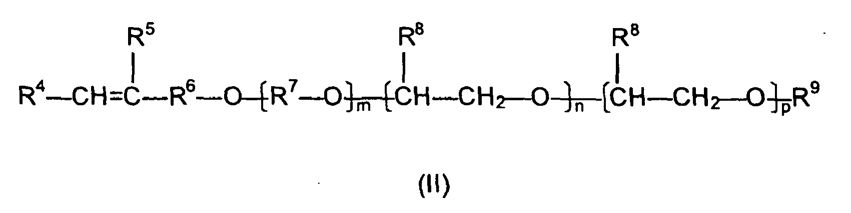 mit
- R⁴ =: H, C₁-C₂₀-Alkylreste, vorzugsweise C₁-C₁₀-Alkylreste,
- R⁵ =: H, CH₃,
- R⁶ =: Alkylenreste mit 0 bis 20 C-Atomen, vorzugsweise mit 0 bis 10 C-Atomen,
- R⁷ =: C₁-C₂₀-Alkylenreste, vorzugsweise C₁-C₁₀-Alkylenreste,
- R⁸ =: H, C₁-C₂₀-Alkylreste, vorzugsweise C₁-C₁₀-Alkylenreste,
- R⁹ =: H, C₁-C₂₀-Alkylreste, vorzugsweise C₁-C₁₀-Alkylenreste, C₆-C₁₀-Arylreste, COR³, NO₂M, SO₃M, PO₃M₂,
- m =: 0 bis 10, vorzugsweise 0 bis 5,
- n =: 1 bis 300, vorzugsweise 1 bis 150,
- p =: 0 bis 300, vorzugsweise 0 bis 150,
und wobei
R³ und M oben genannte Bedeutung besitzen.

Bei den Makromonomeren (B) handelt es sich insbesondere um Vinyl- oder Allylether von Polyalkylenoxiden, wobei als Alkylenoxid-Einheiten bevorzugt Ethylenoxid, Propylenoxid und Butylenoxid anzusehen sind. Bei den entsprechenden Polyalkylenoxid-Verbindungen kann es sich hierbei um statistische Copolymere oder Blockcopolymere handeln.

Im Wesentlichen stellen die Poly(alkylenoxid)-artigen Makromonomere (B) die entsprechenden Seitenketten im erfindungsgemäß verwendeten Zusatzmitteln dar. Die Seitenkettenlänge kann durch das Molekulargewicht des Poly (alkylenoxids) variieren. Bevorzugt sind Molekulargewichte (M_{w}) von 1.000 bis 2.000 g/mol. Je nach Anwendungsfall, ob das Zusatzmittel stärker als "water reducer" oder als "slump retainer" verwendet soll, können die Kettenlängen der Poly(alkylenoxide) auch deutlich erhöht (z. B. M_{w} ∼ 10.000 g/mol) oder entsprechend verringert werden (z. B. M_{w} ∼ 500 g/mol). Die erforderlichen Eigenschaften sind auch durch ein gezieltes Mischen der Poly(alkylenoxid)-artigen Makromonomere (B) mit unterschiedlichen Molmassen einstellbar.

Bei den erfindungsgemäßen polymeren Zusatzmitteln kann man das Molverhältnis von Phosphor-haltigem Monomer (A) und Makromonomer (B) in weiten Grenzen variieren, doch hat es sich als besonders vorteilhaft erwiesen, das molare Verhältnis von Monomer (A) zu Monomer (B) im Copolymer auf 2 : 1 bis 1 : 2 einzustellen.

Will man die Ladungsdichte am Polymerrückgrat verändern, so ist es von Vorteil, dass die polymeren Zusatzmittel auf Basis des Phosphor-haltigen Monomers (A) und Monomers (B) noch zusätzlich Bausteine auf Basis der Monomere (C) gemäß den allgemeinen Formeln (IIIa) und/oder (IIIb) enthalten: 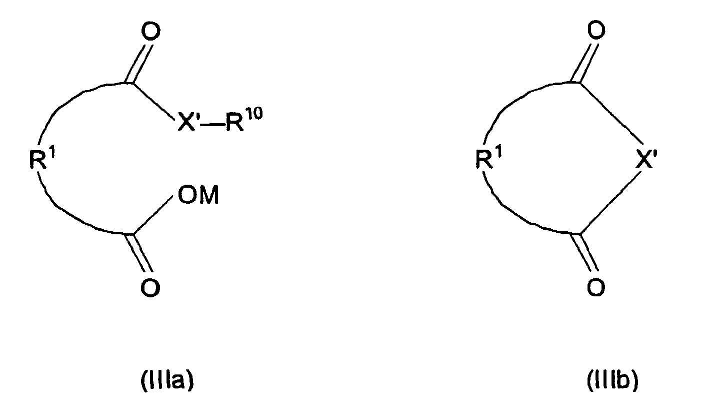 wobei
- X' =: O, S, NH, NR¹⁰,
- R¹⁰ =: H, C₁-C₂₀-(Hetero-)Alkylreste ggf. mit O- oder N-Heteroatomen, die linear oder verzweigt sind und ggf. 1 bis 10 OH- und/oder NH₂-Gruppen aufweisen, sowie C₆-C₁₀-Arylreste
darstellen und
R¹ und M oben genannte Bedeutung besitzen.

Hierbei werden insbesondere N-(Hetero-)Alkyl- oder N-Arylimide gemäß Formel (IIIb) verwendet, wobei die Alkylreste oder Heteroalkylreste (mit O- oder N-Heteroatomen) noch OH- oder NH₂-Gruppen aufweisen können. Gemäß einer bevorzugten Ausführungsform werden hierbei wasserlösliche N-Hydroxyalkyl-maleinimide (z. B. Hydroxyethyl-maleinimid) eingesetzt.

Es ist ebenfalls möglich, die von den Phosphor-haltigen Anionen herrührende Ladungsdichte dadurch zu beeinflussen, dass die polymeren Zusatzmittel noch Monomere (C) gemäß der allgemeinen Formel (IIIb) in Form von Maleinsäureanhydrid (X' = O) enthalten, wodurch das Dispergierverhalten der polymeren Zusatzmittel stark beeinflusst wird. Gemäß einer bevorzugten Ausführungsform sind im Copolymer auf Basis der Monomere (A) und (B) bis zu 90 % von Monomer (A) durch Monomer (C) ersetzt.

Anstelle der elektronenarmen Monomere (C) können auch elektronenreiche Monomere (D) der allgemeinen Formel (IV) eingesetzt werden: 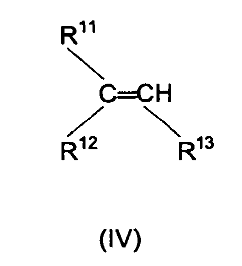 wobei
- R¹¹ =: H, R¹⁰, (CH₂)ᵣOR¹⁰, O(C=O)R¹⁰,
- R¹², R¹³ =: H, C₁-C₂₀-Alkylreste, vorzugsweise C₁-C₁₀-Alkylreste oder C₆-C₁₀-Arylreste und
- r =: 0 bis 10 darstellen und
R¹⁰ oben genannte Bedeutung besitzt.

Um die Seitenkettendichte im Copolymer zu variieren, ohne die Ladungsdichte am Polymerrückgrat zu verändern, werden hierbei insbesondere Alkenylether, -ester oder -alkohole verwendet, wobei als Alkenylether Methylvinylether und Hydroxybutylvinylether, als Alkenylester Vinylacetat und als Alkenylalkohole Allylalkohol bevorzugt eingesetzt werden.

Gemäß einer bevorzugten Ausführungsform wird das Monomer (D) in einer solchen Menge verwendet, dass im Copolymer auf Basis der Monomere (A) und (B) bis zu 90 Mol-% des Monomers (B) durch das Monomer (D) ersetzt sind.

Entsprechend einer weiteren Verfahrensvariante können im Copolymer auf Basis der Monomere (A) und (B) bis zu 90 Mol-% der Monomere (A) und (B) durch die Monomere (C) und (D) ersetzt sein.

Die Copolymere auf Basis der Monomere (A), (B) sowie ggf. (C) und (D) zeichnen sich dadurch aus, dass sie bezüglich der Monomerzusammensetzung entlang ihrer Hauptkette sehr einheitlich aufgebaut sind, da es sich um nahezu alternierende Copolymerisate handelt. Voraussetzung jedoch ist, dass nur ein elektronenarmes Monomer (C) mit einem elektronenreichen Monomeren (D) umgesetzt werden.

Werden aber entsprechende Gemische elektronenreicher Monomere und Gemische elektronenarmer Monomere eingesetzt, so können auch alternierende Domänen entlang der Hauptkette auftreten, welche die Eigenschaften des Copolymers als Fließmittel sehr stark beeinflussen können.

Es ist im Rahmen der vorliegenden Erfindung noch möglich, weitere Comonomere (E) entsprechend der allgemeinen Formel (V) in das Copolymer auf Basis der Monomere (A) und (B) sowie ggf. (C) und (D) einzubauen, die weder als elektronenarme noch als elektronenreiche Monomere angesehen werden: 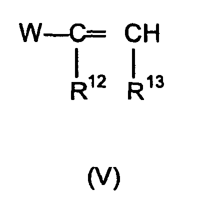 wobei
- W =: CN, CO-R¹⁴,
- R¹⁴ =: H, OM, OR¹⁰, NHR¹⁰, N(R¹⁰)₂, SR¹⁰ darstellen und
R¹⁰, R¹², R¹³ sowie M oben genannte Bedeutung besitzen.

Als besonders bevorzugt werden hierbei die α,β-ungesättigten Carbonsäuren (W = CO-R¹⁴; R¹⁴ = OM) wie z. B. Acrylsäure oder Methacrylsäure und deren wasserlösliche Derivate wie z. B. Hydroxypropylacrylat oder Hydroxyethylmethacrylat verwendet. Vorzugsweise enthält das Copolymer auf Basis der Monomere (A), (B) sowie ggf. (C) und (D) das Monomer (E) in einer Menge von bis zu 10 Mol-Equivalenten, bezogen auf die Summe der Monomere (A) und (B) sowie ggf. (C) und (D).

Bei Verwendung solcher Comonomere (E) kann der alternierende Aufbau der Copolymere aus den Monomeren (A) und (B) sowie ggf. (C) und (D) verloren gehen, was jedoch kein Nachteil sein muss.

Es hat sich im Gegenteil gezeigt, dass der Einsatz der Monomere (E) die Monomerumsetzungen von (A) und (B) sowie ggf. (C) und (D) (und damit die Polymerausbeuten insgesamt) deutlich verbessern kann. Comonomere vom Typ (E) modifizieren die Seitenketten- und Ladungsdichte der Copolymere und können bei ihrer Verwendung als Fließmittel ganz besonders die Eigenschaften von einem "slump retainer" und "water reducer" in einem polymeren Zusatzmittel vereinen.

Die Polymerisation der erfindungsgemäßen Phosphor-haltigen Monomere (A) mit den Comonomeren (B) sowie ggf. (C), (D) und (E) erfolgt prinzipiell nach Methoden der radikalischen Initiierung, die dem Fachmann auf dem Gebiete der Polymerisation bekannt sind. Die Generierung von Radikalen kann entweder durch
(a) thermische Zersetzung von geeigneten Peroxo- oder Azoinitiatoren,
(b) photochemisch oder
(d) durch Verwendung eines Redox-Systems
erfolgen.

Bevorzugt werden dabei wasserlösliche Azoinitiatoren wie z. B. 2,2'-Azobis (2-methylpropionamidin)-dihydrochlorid *[CAS 2997-92-4]*, 2,2'-Azobis[2-(2-imidazolin-2yl)propan]-dihydrochlorid *[CAS 27776-21-2]* oder 4,4'-Azobis[4-cyanopentansäure] *[CAS 2638-94-0]* verwendet, ohne einen Anspruch auf Vollständigkeit zu erheben. Diese Azoinitiatoren zeichnen sich auch dadurch aus, dass höhere Temperaturen (T > 60 °C) zur Radikalbildung notwendig sind. Polymerisationen bei Raumtemperatur bedürfen bei solchen Azoinitiatoren einer photochemischen Zerfallsanregung.

Besonders bewährt hat sich bei der Initiierung radikalischer Polymerisationen im Bereich T = 0 - 30 °C jedoch die Verwendung eines Redoxsystems, bestehend aus Wasserstoffperoxid, Eisen(II)sulfat und einem Reduktionsmittel Abb. 1). Als bewährte Reduktionsmittel (RM) haben sich - in Abhängigkeit vom pH-Wert - Produkte der Firma Brüggemann erwiesen (z. B. Rongalite^{®}: Natriumsalz des Hydroxymethylsulfonat·2H₂O oder Brüggolit^{®}: 50-60% Dinatrium-Salz der 2-Hydroxy-2-sulfinato-essigsäure, 30-35% Natriumsulfit, 10-15% Dinatrium-Salz der 2-Hydroxy-2-sulfonato-essigsäure).

### Abbildung 1:

Initiator System: FeSO₄ / H₂O₂ / Reducing Agent (RA)

Fe²⁺ → Fe³⁺ + e⁻

H₂O₂ + e⁻ → OH⁻ + ·OH

Fe³⁺ + RA → Fe²⁺

Reducing Agent (RA) = Brüggolit pH 5.0 - 6.3

Die Polymerisationstemperaturen können im wässrigen System zwischen - 10 °C und 100 °C liegen. Im Falle der photochemischen oder Redox-Radikalerzeugung liegen die Temperaturen bevorzugt zwischen 0 °C und 30 ° C.

Die Monomere können je nach Reaktivität entweder vor Beginn der Polymerisation komplett vorgelegt oder auch im Verlaufe der Polymerisation zudosiert werden.

Das bevorzugte Lösemittel zur Polymerisation ist Wasser. Es können aber auch andere Medien (protische oder aprotische Lösemittel, Schmelzen, superkritische Flüssigkeiten) verwendet werden.

Die erfindungsgemäß vorgeschlagenen polymeren Zusatzmittel eignen sich hervorragend als Fließmittel (Wasserreduktionsmittel, Superplasticiser) oder "slump retainer" für anorganische Bindemittelsuspensionen auf Basis von Zement, Kalk, Gips und Anhydrit, wobei es in einer Menge von 0,01 bis 10 Gew.-%, insbesondere 0,05 bis 5 Gew.-%, bezogen auf das Gewicht des anorganischen Bindemittels, verwendet wird. Das polymere Zusatzmittel besitzt hierbei ausgezeichnete wasserreduzierende Eigenschaften und verleiht dem Beton über einen längeren Zeitraum eine konstante Fließfähigkeit.

Die nachfolgenden Beispiele sollen die Erfindung näher veranschaulichen.

### Beispiele

### A) Allgemeine Vorschriften zur Synthese von Phosphor-haltigem Maleinsäureanhydrid-Monomeren

### A.1) Phosphatierung von AminoalkyllArylalkoholen mit 85%-iger Phosphorsäure

1.0 mol des Aminoalkohols wird als ca. 20 %-ige Lösung in o-Xylol mit 1.1 mol 85 %-ige Phosphorsäure gerührt und unter Stickstoff bis zur azeotropen Destillation des Wassers erhitzt. Mit Fortlauf der Reaktion scheidet sich der in o-Xylol unlösliche Aminoalkyllaryl-phosphorsäureester als zäher, sirupöser Rückstand ab. Die Reaktion ist beendet, wenn die theoretische Menge H₂O mittels Wasserabscheider aufgefangen wurde. Die Isolierung bzw. Reinigung des Produktes kann nach zwei Methoden erfolgen: A) Nach Abdekantieren des o-Xylols lässt sich das zähe sirupöse Produkt mit H₂O/EtOH in eine kristalline Form überführen. B) Mit Zugabe von Wasser kann das sirupöse Produkt gelöst und durch Ausschütteln vom Xylol abgetrennt werden. Umsetzungsgrade (Phosphatierungsgrad) und analytische Daten sind in Tabelle 3 zusammengefasst.

**Tabelle 3**

| Phosphatierung verschiedener Aminoalkohole in o-Xylol bei ΔT (- 140°C) (Reaktionzeit: bis die theoretische Menge an H₂O aufgefangen wurde) | | |
|---|---|---|
| Edukt (Aminoalkohol) | Ausbeute^{(a)} | 1H-NMR (D₂O) |
| • Phosphatiertes Produkt | | Chemische Verschiebung^{(b)} [δ, ppm] |
| Aminoethanol (AE) | 7 ± 2% | 3.70 (t) CH₂OH, 3.02 (t) CH₂NH₂ (AE); |
| • AE-phosphat (AEP) | 93 ± 2% | 3.98 (q) CH₂O-P, 3.16 (t) CH₂NH₂ (AEP) |
| (2-Aminoethoxy)ethanol (AEE) | 13 ± 6% | 3.51 (t) CH₂OH, 3.60 (t), 3.56 (t) CH₂OCH₂ (AEE); |
| • AEE-phosphat (AEEP) | 87 ± 6% | 3.87 (sx) CH₂O-P, 3.07 (t) CH₂NH₂ (AEEP) |
| Aminohexanol (AH) | 19 ± 1% | 3.51 (t) CH₂OH, 1.6 -1.3 (m) CH₂ (AH); |
| • AH-phosphate (AHP) | 80 ± 1% | 3.78 (q) CH₂O-P, 2.91 (t) CH₂NH₂ (AHP) |
| Diethanolamin (DEA) | 7 ± 2% | 3.70 (t) CH₂OH, 3.10 (t) CH₂NH₂ (DEA); |
| • DEA-diphosphat (DEA-P2) | 93 ± 2% | 4.01 (q) CH₂O-P, 3.23 (t) CH₂NH₂ (DEA-P2) |
| TRIS^{(*c*)} *[CAS 77-86-1]* • | 14 ± 1% | 3.69, 3.64, 3.58 (s) CH₂OH (TRIS); |
| TRIS-triphosphat (TRIS-P3) | 86 ± 1% | 4.02 (t, 66%), 3.97 (dd, 28%), 3.91 (dd, 6%) CH₂O-P |

| | | |
|---|---|---|
| (a) Die Ausbeute entspricht dem Phosphatierungsgrad (PG) und wurde mit Hilfe der 1 H-NMR (D₂O) bestimmt. Der rückständige Aminoalkohol wurde vom phosphatierten Produkt nicht abgetrennt. (b) Die Phosphatierung der OH-Gruppen zeigt eine typische Tieffeldverschiebung des Protonensignals CH₂O-P verglichen mit dem Signal CH₂OH der freien Hydroxylgruppe von etwa 0.30 ± 0.03 ppm. Zurückzuführen auf "longe-range"-PH-Kopplungen ist das Signal CH₂O-P zusätzlich aufgespalten. (c) TRIS = Tris(hydroxymethyl)aminomethan | | |

### A.2) Phosphonat-Bildung aus Carbonsäuren und Carbonsäure-Derivaten mit Aminoalkyl-/Ary/-Resten

Die Phosphonat-Bildung aus Carbonsäuren oder Nitrilen wird bei hohen Temperaturen (140 -150 °C) mit reiner Phosphoriger Säure oder unter Zuhilfenahme von Phosphorhalogeniden (POCl₃, PCl₃, PBr₃) oder HCl-Gas erreicht. Entsprechende Herstellungsverfahren sind bekannt (z. B. US 4,239,695, US 4,100,167, US 3,799,758, US 3,400,149, DE 21 30 794). In Tabelle 4 sind Beispiele von technisch sehr besonders interessanten Phosphonat-Produkten aufgelistet, die noch eine freie Aminogruppe besitzen.

**Tabelle 4**

| Phosphonatbildung bei Verwendung der technisch relevantesten Aminohaltigen Ausgangsverbindungen | | |
|---|---|---|
| Edukt | Produkt und Formul von Phosphonat-haltigen Aminen | |
| Glycin | 1-Hydroxy-2-aminoethan-1.1-diphosphonat | 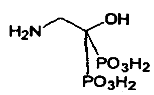 |
| ß-Alanin | 1-Hydroxy-3-aminopropan-1.1-diphosphonat | 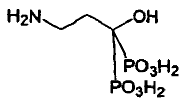 |
| Imino-diacetonitril | 2.2'-Imino-bis-(1-aminoethan-1.1'-diphosphonat) | 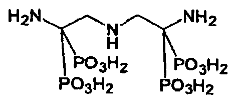 |
| Imino-dipropionitril | 3.3'-Imino-bis-(1-aminopropan-1.1'-diphosphonat) | 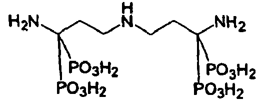 |

### A.3) Amidierung von Maleinsäureanhydrid (MSA) mit Phosphor-haltigen Aminoalkyl-/Aryl-Verbindungen

1 mol eines in 300 mL Wasser gelösten Aminoalkyl-/Aryl-phosphorsäureesters wird mit NaOH auf pH 5.5 eingestellt und unter Rühren mit 1.0 - 2.5 mol Maleinsäureanhydrid (MSA), gelöst in 300 mL trockenem Aceton, versetzt. Die Geschwindigkeit der MSA-Zugabe wird dabei so gewählt, dass der pH-Wert der Reaktionslösung zwischen 5.5 - 6.5 und die Reaktionstemperatur bei 25 ° C verbleibt. Der pH-Wert wird mit einer NaOH-Lösung reguliert. Nach der MSA-Zugabe wird noch 2 h bei Raumtemperatur oder - je nach Reaktivität und sterischem Anspruch des Amins - bei höherer Temperatur gerührt. Nach Reaktionsende wird das Aceton unter vermindertem Druck beseitigt und die Lösung filtriert. Die nun vorliegende wässrige Monomer-Lösung kann direkt zur Copolymerisation verwendet werden.

Beispiele dieser neuartigen Phosphor-haltigen MSA-Monomere, ihre Ausbeuten und 1 H-NMR-Daten sind in Tabelle 5 zusammengefasst.

**Tabelle 5**

| Ausbeute und Strukturanalytik der Phosphor-haltigen MSA-Derivate nach der Amidierung von MSA mit verschiedenen phosphatierten Aminoalkyl-/Arylalkoholen | | | |
|---|---|---|---|
| MSA (Gehalt) | MSA-Derivat aus Phosphor-enthaltendes Amin (1.0 eq.) | Ausbeute an MSA-Amid^{(a)} | 1H-NMR (D₂O) vorn MSA-Amid Chemische Verschiebungen^{(b)} [δ, ppm] |
| 1.2 eq. | Aminoethanol- | 98 ± 1% | 6.24 (d), 5.88 (d), 2H, CH=CH; 3.82 (q), 2H, CH₂O-P; |
| | phosphat (AE-P) | | 3.37 (t), 2H, CH₂NH(C=O) |
| 1.2 eq_{.} | (Aminoethoxy)ethanol- | 91 ± 4% | 6.20 (d), 5.81 (d), 2H, CH=CH; 3.83 (q), 2H, CH₂O-P; |
| | phosphat (AEE-P) | | 3.58 (t), 3.53 (t), 4H, CH₂OCH₂; 3.29 (t), 2H, CH₂N(CO) |
| 2.0 eq_{.} | Aminohexanol- | 93% | 6.23 (d), 5.83 (d), 2H, CH=CH; 3.73 (q), 2H, CH₂O-P; |
| | phosphat (AHP) | | 3.11 (t), 2H, CH₂NH(C=O); 1.6 -1.2 (m), 8H, CH₂ |
| 1.2 eq_{.} | Aminobenzylalkohol- | n.d. | 6.26 (d), 5.92 (d), 2H, CH=CH; 4.70 (d), 2H, CH₂O-P; |
| | phosphat (ABA-P) | | 7.3 - 6.9 (m), 4H, Phenyl |
| 2.0 eq. | Diethanolamin- | 95 ± 4% | 6.36 (d), 6.05 (d), 2H, CH=CH; 3.85 (m), 4H, CH₂O-P; |
| | diphosphat (DEA-P2) | | 3.57 (t), 4H, CH₂N(C=O) |

| | | | |
|---|---|---|---|
| (a) Die Ausbeute entspricht dem Gehalt an amidierten MSA im Vergleich zu nichtumgesetzten Amin und wurde mit Hilfe der 1 H-NMR (D₂O) bestimmt. (b) Die Amidierung des MSA ergibt eine typische Aufspaltung der vinylischen Protonen des MSA (5.96 (s), 2H, CH=CH). Außerdem erhält man eine typische Tieffeldverschiebung des Protonensignals CH₂N(C=O) verglichen mit dem Signal CH₂NH einer freien Aminogruppe von etwa 0.27 ± 0.07 ppm. | | | |

### B.1) Allgemeine Vorschrift zur Copolymerisation auf der Basis Phosphorhaltiger MSA-Monomere, Poly(alkylenoxid)-haltiger Alkenylether sowie weiterer Comonomere

In einem temperierbaren Doppelwandreaktor wird 1.0 mol einer möglichst konzentrierten wässrigen Lösung eines Vinyloxybutyl-poly(ethylenglycol)-ether (VOBPEG, z.B. M_{w} = 500 g/mol) vorgelegt und unter Rühren mit 1.0 - 1.7 mol einer 25 %-igen Lösung an Phosphor-haltigem MSA-Derivat (z.B. MSA-AEP) bei pH > 5 vermischt. Unter Stickstoff werden bei 15 °C katalytische Mengen an FeSO₄·7H₂O (0.05 - 0.5 mmol) und eine 30 %-ige WasserstoffperoxidLösung (30 - 100 mmol) zugegeben. Die Polymerisation erfolgt bei pH > 5 durch gleichmäßige Zugabe einer 3 - 10 %-igen Lösung des Reduktionsmittels Brüggolit^{®} (pH 5.0 - 6.3, Firma Brüggemann). Der Peroxid gehalt wird verfolgt und die Polymerisation ist beendet, wenn das Wasserstoffperoxid durch das Brüggolit^{®} vollständig verbraucht wurde (Schema 5). Die Zusammensetzung und Molmasse von diesem Copolymer 1 (AEP-5) liegt in Tabelle 6 vor.

Die Copolymerisation kann anhand nachfolgender Beispiele variiert und erweitert werden:
(1) Die Poly(alkylenglycol)-haltigen Alkenylether können unterschiedliche Kettenlängen (z.B. VOBPEG: 500, 1.100, 2.000, oder 5.800 g/mol) aufweisen oder Gemische von unterschiedlicher Kettenlänge darstellen. Bsp.: Polymer 1, 2, 3, 4, 5, 10
(2) Es können weitere Phosphor-haltige MSA-Monomere verwendet werden, wie sie beispielsweise in Tabelle 4 und 5 beschrieben werden. Bsp.: Polymer 1, 12, 14, 16, 17
(3) Es sind vielfältige Kombinationen von Punkt (1) und (2) möglich. Bsp.: Polymer 13, 15, 18, 19, 20
(4) Die Poly(alkylenglycol)-haltigen Alkenylether können zwischen 0 - 100 Mol-% mit niedermolekularen Alkenylethern (z. B. n-Hydroxybutylmonovinylether HBVE) und -estern (z. B. Vinylacetat) substituiert werden. Bsp.: Polymer 21, 22, 23, 24, 25, 26
(5) Die Phosphor-haltigen MSA-Monomere können zwischen 0 - 100 Mol-% mit MSA und anderen MSA-Derivaten (z. B. N-Hydroxyethyl-maleimid MSI-HE) substituiert werden.
   Bsp.: Polymer 27, 28, 29, 30
(6) Die Punkte (4) und (5) können ebenfalls kombiniert werden.
   Bsp.: Polymer 31, 32
(7) Es sind weitere Comonomere zwischen 0 - 100 moleq. einsetzbar, die sowohl neutral geladen wie z. B. α,β-ungesättigte Hydroxyalkylester wie Hydroxypropylacrylat (HPA) oder Hydroxyethylmethacrylat (HEMA), aber auch ionischer Natur (anionisch: z. B. Acrylsäure, oder kationisch: z. B. vinylhaltige quartäre Ammoniumverbindungen) sein können.
   Bsp.: Polymer 6, 7, 8, 9, 11
(8) Die Punkte (3) und (6) sind natürlich auch mit dem Punkt (7) kombinierbar. Die Zusammensetzung und Molmassen der aufgeführten Phosphor-haltigen Copolymere sind in Tabelle 6 und 7 zusammengefasst. Um die essentielle Bedeutung der anionischen Phosphor-haltigen Gruppierungen in den Polymeren hinsichtlich ihrer Verwendung als zementäre Fließmittel hervorzuheben, wurden Copolymere aus N-Hydroxyethyl-maleinsäureamid (MSA-AE) und VOBPEG synthetisiert, die ausschließlich Carboxylat-Ladungen am Polymerrückgrat besitzen. Vergleiche Bsp.: Polymer 33, 34

**Tabelle 6**

| Aufbau von nahezu alternierenden Copolymeren durch die Polymerisation von fast equimolaren Mengen an Phosphor-haltigen MSA-Monomeren und PEG-haltigen Vinylethern sowie der Aufbau von Phosphor-haltigen Polymeren durch die Copolymerisation von Phosphor-haltigen MSA-Derivaten und PEG-haltigen Vinylethern mit wasserlöslichen Estern der α,β-ungesättigten Carbonsäuren | | | | | | | | |
|---|---|---|---|---|---|---|---|---|
| Nr. | P-enthaltende MSA-Monomere (1.2 eq.) | VOBPEG^{(a)} (1.0 eq.) | | | Co- monomer | (eq.) | GPC-Daten | |
| | | M_{w} (g/mol) | M_{w} (g/mol) | Ratio | | | M_{w} (g/mol) | M_{w}/Mₙ |
| 1 | MSA-AE-P^{(b)} -''- | 500 | - | | - | | 11.690 | 1.25 |
| 2 | -''- | 1.100 | - | | - | | 22.900 | 1.13 |
| 3 | | 2.000 | - | | - | | 27.000 | 1.45 |
| 4 | -''- | 2.000 | 500 | | - | | 15.800 | 1.12 |
| 5 | -''- | 2.000 | 500 | | - | | 24.400 | 1.61 |
| 6 | -''- | 2.000 | - | 1 : 2 | HPA^{(g)} | 0.5 | 24.900 | 1.30 |
| 7 | -''- | 2.000 | - | | HPA | 1.0 | 40.200 | 1.65 |
| 8 | -''- | 2.000 | - | 2 : 1 | HPA | 2.0 | 24.900 | 1.88 |
| 9 | -''- | 2.000 | - | | HEMA^{(h)} | 1.0 | 28.700 | 1.93 |
| 10 | -''- | 5.800 | - | | - | | 26.300 | 1.32 |
| 11 | -''- | 5.800 | - | | HPA | 2.0 | 82.000 | 2.24 |
| 12 | MSA-AEE-P^{(c)} | 500 | - | | - | | 16.200 | 1.25 |
| 13a | -''- | 2.000 | - | | - | | 23.900 | 1.50 |
| 13b | -''- | 2.000 | - | | - | | 23.050 | 1.21 |
| 14 | MSA-AH-P^{(d)} | 500 | - | | - | | 20.900 | 1.46 |
| 15 | -''- | 2.000 | - | | - | | 32.100 | 1.63 |
| 16 | MSA-ABA-P^{(e)} | 500 | | | - | | 26.200 | 1.64 |
| 17 | MSA-DEA-P2^{(f)} | 500 | - | | - | | 13.400 | 1.32 |
| 18 | -''- | 1.100 | - | | - | | 8.050 | 1.19 |
| 19 | -''- | 2.000 | - | | - | | 13.400 | 1.32 |
| 20 | -''- | 5.800 | - | | - | | 25.900 | 1.27 |

| | | | | | | | | |
|---|---|---|---|---|---|---|---|---|
| (a) VOBPEG = Vinyloxybutyl-poly(ethylenglycol) (b) MSA-AE-P = N-(Aminoethyl-phosphat)-maleinsäureamid (c) MSA-AEE-P = N-(2-Aminoethoxy-ethyl-phosphat)-maleinsäureamid (d) MSA-AH-P = N-(Aminohexyl-phosphat)-maleinsäureamid (e) MSA-ABA-P = N-(Aminobenzylalcohol-phosphat)-maleinsäureamid (f) MSA-DEA-P2 = N-(Diethanolamin-diphosphat)-maleinsäureamid (g) HPA = Hydroxypropyl-acrylat (h) HEMA = Hydroxyethyl-methacrylat | | | | | | | | |

**Tabelle 7**

| Aufbau von nahezu alternierenden Phosphor-haltigen Copolymeren durch die Polymerisation von Gemischen aus MSA-Derivaten und Vinylethern, die Phosphor-haltige MSA-Monomere und PEG-haltige Vinylether enthalten | | | | | | | | |
|---|---|---|---|---|---|---|---|---|
| Nr. | P-enthaltende MSA-Monomere (1.2 eq.) | MSA-Co- monomere | Ratio | VOBPEG^{(a)} M_{w} (g/mol) (1.0 eq.) | Vinyl ether | Ratio | GPC-Daten M_{w} M_{w}/Mₙ (g/mol) | |
| 21 | MSA-AE-P^{(b)} | - | - | 2.000 | HBVE^{(c)} | 1 : 2 | 20.700 | 1.64 |
| 22 | -''- | - | - | 2.000 | HBVE | 2 : 1 | 22.100 | 1.19 |
| 23 | -''- | - | - | 5.800 | HBVE | 1 : 2 | 24.200 | 1.58 |
| 24 | -''- | - | - | 5.800 | HBVE | 2 : 1 | 29.100 | 1.50 |
| 25 | MSA-DEA-P2^{(d)} | - | - | 5.800 | HBVE | 1 : 2 | 25.056 | 1.37 |
| 26 | MSA-AE-P | - | - | 2.000 | TEGVE^{(e)} | 1 : 1 | 21.300 | 1.21 |
| 27 | MSA-AE-P | MSA | 2 : 1 | 2.000 | - | - | 33.800 | 1.62 |
| 28 | -''- | -''- | 1 : 2 | 2.000 | - | - | 29.500 | 1.46 |
| 29 | MSA-AE-P | MSI-HE^{(f)} | 2 : 1 | 2.000 | - | - | 50.000 | 2.06 |
| 30 | -''- | -''- | 1 : 2 | 2.000 | - | - | 60.600 | 2.28 |
| 31 | MSA-AE-P | MSI-HE | 1 : 1 | 2.000 | HBVE | 1 : 1 | 35.200 | 2.03 |
| 32 | -''- | -''- | 1 : 1 | 5.800 | HBVE | 1 : 1 | 46.000 | 1.61 |
| 33 | - | MSA-AE^{(g)} | - | 500 | - | - | 11.500 | 1.98 |
| 34 | - | MSA-AE | - | 2.000 | - | - | 29.100 | 1.71 |

| | | | | | | | | |
|---|---|---|---|---|---|---|---|---|
| (a) VOBPEG = Vinyloxybutyl-poly(ethylenglycol)ether (b) MSA-AE-P = N-(Aminoethyl-phosphat)-maleinsäureamid (c) HBVE = Hydroxybutyl-vinylether (d) MSA-DEA-P2 = N-(Diethanolamin-diphosphat)-maleinsäureamid (e) TEGVE = Triethylenglycol-methylvinylether (f) MSI-HE = N-Hydroxyethyl-maleinsäureimid (g) MSA-AE = N-Aminoethyl-maleinsäureamid | | | | | | | | |

### C) Die Verwendung der Phosphor-haltigen Polymere als Wasserreduktionsmittel (Fließmittel)

### Bestimmung von Wasserreduktionsvermögen, Erhalt der Fließfähigkeit und Druckfestigkeiten in Mörtelgemischen

Die Durchführung der Tests erfolgte gemäß den Betonnormen DIN EN 206-1, DIN EN 12350-2 und DIN EN 12350-5. Als Zement wurde ein CEM I 42.5 R (Karlstadt) verwendet. Die Zuschlagsstoffe für die Mörtel- und Betonmischungen sind in der Tabelle 8 aufgeführt.

### Mischablauf Mörtelmischung:

Es werden 600 g Zementpulver trocken homogenisiert und in einen RILEM-Mischer gegeben. Dann wird die entsprechend einem W/Z-Wert benötigte Menge Wasser zugegeben und 30 sec. bei 140 U/min. (Stufe I) gemischt. Die Zugabe des Sandgemisches erfolgt anschließend bei laufendem Mischer mit Hilfe eines Trichters und es wird weitere 30 sec. bei 140 U/min. (Stufe I) gemischt. Nach einer Mischpause von 1.5 min. und gesäuberten Rändern vom Mischer wird eine entsprechende Menge Fließmittel zugegeben. Es wird weitere 60 sec. bei 285 U/min. (Stufe II) gemischt und anschließend das Fließmaß (Ausbreitmaß) durch 10-maliges Klopfen auf einem Klopftisch mit Hägermann-Konus bestimmt.

### Mischablauf Betonmischung:

Für die Betonmischungen wird ein 30-L-Mischer verwendet. Es werden 4.8 kg Zement und die entsprechende Menge an Zuschlägen 10 sec. lang trocken vorgemischt. Dann gibt man 300 mL Vorgabewasser dazu und nach weiteren 2 min. des Mischens die entsprechend dem verwendeten W/Z-Wert benötigte Menge an Restwasser. Nach weiteren 60 sec. wird der Betonmischung das gelöste Fließmittel (0.2 Gew.-% Feststoff/Zement) zugegeben und der Mischvorgang nach 60 sec. mit der Ermittlung des Ausbreitmaßes beendet.

**Tabelle 8**

| Rezepturen der Mörtel- und Betonmischung für Mörtel- und Betontests | | | | | | |
|---|---|---|---|---|---|---|
| | Mörteltest | | | Betontest | | |
| Zusammensetzung | S/Z-Wert^{(a)} = 2.2 | | Gewicht [g] | S/G-Wert^{(b)} = 0.48 | | Gewicht [kg/m³] |
| Zuschläge | | | | | *3.3* | |
| | | | | Quarzsand | *%* | |
| | | | | 0/0.5 | *5.2* | 60.9 |
| | Quarzsand | *30* | 178.2 | Quarzsand | *%* | 95.2 |
| | Normsand | % | 415.8 | 0/1.0 | *39.4* | 738.6 |
| | 0/0.25 | *70%* | | Normsand 0/4 | *%* | 366.6 |
| | | | | Kies 4/8 | *19.8* | 602.8 |
| | | | | Kies 8/16 | *%* | |
| | | | | | *32.4* | |
| | | | | | % | |
| | | | | Kalksteinmehl | | 50.0 |
| Zement | CEM I 42.5R ^{(c)} | | 270.0 | CEM I 42.5R ^{(c)} | | 320.0 |
| Fließmittel^{(d)} | (20%-ige Lösung) | | 2.7 | (20%-ige Lösung) | | 3.2 |
| Wasser | | | (e) | | | (e) |

| | | | | | | |
|---|---|---|---|---|---|---|
| (a) S/Z-Wert = Sand/Zement-Wert = Σ Sand [g] + Zement [g] (b) S/G-Wert = Sand/Sand-Kies-Wert = Σ Sand [g] + (Σ Sand [g] + Σ Kies [g]) (c) Zementherkunft: Karlstadt (Deutschland) (d) 0.2 Masse-% Feststoff auf Zement (e) Die benötigte Wassermenge ist abhängig vom eingestellten W/Z-Wert^{(f)} entsprechend dem verwendeten Fließmittel (Tab. 9 und 10). W/Z-Wert = Wasser/Zement-Wert = Σ Wasser [g] ÷ Zement [g] | | | | | | |

**Tabelle 9**

| Mörteltestergebnisse und Druckfestigkeiten, geordnet nach a) dem bestem Wasserreduktionsvermögen (W/Z-Wert), und b) dem Erhalt der Fließfähigkeit über die Zeit (Spread 0 und 90 min.), d.h. dem möglichst unverändertem Ausbreitmaß nach 90 min. | | | | | | | | | | | |
|---|---|---|---|---|---|---|---|---|---|---|---|
| Polymer- Nr. | Dos.^{(a)} | W/Z- Wert^{(b)} | Ausbreitmaß^{(c)} [cm] | | | | Frischbetonrohdichte | Luftporengehalt | Druckfestigkeit [N/mm²] | | |
| | | | 0' | 30' | 60' | 90' | | | 1d | 7d | 28d |
| Wasser | - | 0.57 | 24.7 | 23.4 | 23.0 | 22.5 | 2.162 | 1.5% | 20.3 | 42.8 | 45.8 |
| 33 | 0.25 | 0.49 | 22.4 | - | - | - | 2.230 | 3.0% | n.b. | - | - |
| 34 | 0.25 | 0.49 | 21.6 | - | - | - | 2.221 | 3.2% | n.b. | - | - |

| Wasserreduktionsmittel (Fließmittel) | | | | | | | | | | | |
|---|---|---|---|---|---|---|---|---|---|---|---|
| Glenium 51 | 0.2 | 0.395 | 24.3 | 21.3 | 21.1 | 20.9 | 2.266 | 3.1% | 39.7 | 62.3 | 65.6 |
| 3 | 0.2 | 0.34 | 25.3 | 21.9 | 18.1 | - | 2.280 | 4.5% | 46.9 | 69.0 | 72.2 |
| 2 | 0.2 | 0.347 | 24.5 | 25.0 | 23.0 | 21.7 | 2.256 | 5.2% | 34.6 | 71.3 | 72.7 |
| 13a | 0.2 | 0.355 | 24.7 | 19.8 | - | - | 2.254 | 4.6% | 45.9 | 67.2 | 69.2 |
| 6 | 0.2 | 0.355 | 24.5 | 21.4 | - | - | 2.240 | 4.9% | 45.4 | 63.3 | 70.3 |
| 24 | 0.2 | 0.357 | 24.4 | 18.3 | - | - | 2.218 | 5.6% | 44.6 | 63.9 | 68.1 |
| 13b | 0.2 | 0.362 | 24.3 | 19.5 | - | - | 2.252 | 4.6% | 44.7 | 65.3 | 68.2 |
| 27 | 0.2 | 0.375 | 24.9 | 21.0 | - | - | 2.245 | 4.2% | 41.7 | 62.4 | 69.3 |
| 12 | 0.2 | 0.375 | 24.5 | 20.5 | - | - | 2.237 | 2.7% | 35.5 | 59.9 | 65.1 |
| 1 | 0.2 | 0.384 | 24.3 | 19.1 | - | - | 2.243 | 4.0% | 33.5 | 58.3 | 63.0 |
| 5 | 0.2 | 0.385 | 24.8 | 20.2 | - | - | 2.224 | 3.5% | n.b. | - | - |
| 22 | 0.2 | 0.385 | 24.1 | 21.6 | - | - | 2.219 | 3.9% | n.b. | - | - |
| 9 | 0.2 | 0.385 | 23.9 | 19.8 | - | - | 2.229 | 4.3% | 40.5 | 61.5 | 64.5 |
| 17 | 0.2 | 0.39 | 24.7 | 21.7 | - | - | 2.237 | 4.2% | 12.4 | 51.4 | 55.6 |
| 10 | 0.2 | 0.39 | 23.9 | 19.2 | - | - | 2.232 | 3.8% | 40.1 | 59.5 | 64.0 |
| 4 | 0.2 | 0.392 | 24.1 | 19.2 | - | - | 2.235 | 4.2% | 31.2 | 54.9 | 59.4 |
| 28 | 0.2 | 0.41 | 25.1 | 22.7 | - | - | 2.269 | 2.3% | 33.2 | 61.5 | 67.6 |
| 18 | 0.2 | 0.416 | 24.2 | 21.1 | - | - | 2.229 | 3.6% | 34.3 | 57.8 | 62.3 |
| 29 | 0.2 | 0.42 | 24.5 | 22.1 | - | - | 2.244 | 3.6% | n.b. | - | - |
| 23 | 0.2 | 0.42 | 24.6 | 20.7 | - | - | 2.236 | 3.0% | 34.7 | 56.4 | 59.3 |
| 26 | 0.2 | 0.422 | 24.6 | 21.2 | - | - | 2.224 | 3.2% | 32.1 | 61.9 | 69.7 |
| 21 | 0.2 | 0.425 | 24.5 | 23.5 | 22.7 | - | 2.215 | 4.0% | n.b. | - | - |
| 19 | 0.2 | 0.44 | 23.9 | 22.6 | - | - | 2.237 | 2.7% | 31.3 | 55.9 | 58.7 |
| 25 | 0.2 | 0.46 | 24.0 | 22.1 | - | - | 2.224 | 2.4% | 29.3 | 54.8 | 58.9 |
| 20 | 0.2 | 0.49 | 24.5 | 23.8 | - | - | 2.208 | 5.3% | 25.8 | 51.1 | 55.6 |
| 30 | 0.2 | 0.49 | 21.1 | - | - | - | 2.252 | 3.6% | n.b. | - | - |

| Slump retainer | | | | | | | | | | | |
|---|---|---|---|---|---|---|---|---|---|---|---|
| Glenium 27 | 0.24 | 0.50 | 24.1 | 23.2 | 23.1 | 23.2 | 2.201 | 2.3% | 22.9 | 50.6 | 56.6 |
| 8 | 0.2 | 0.43 | 22.7 | 26.3 | 28.2 | 28.0 | 2.185 | 4.3% | 31.1 | 54.3 | 56.0 |
| 32 | 0.2 | 0.432 | 24.1 | 25.7 | 25.1 | 24.7 | 2.208 | 3.9% | 31.3 | 54.0 | 55.2 |
| 7 ^{(d)} | 0.2 | 0.395 | 23.9 | 24.3 | 24.3 | 23.7 | 2.221 | 4.3% | 36.9 | 58.3 | 59.9 |
| 31 | 0.2 | 0.431 | 24.1 | 25.4 | 24.1 | 23.5 | 2.231 | 2.6% | 30.3 | 57.0 | 64.7 |
| 7 ^{(e)} | 0.2 | 0.438 | 24.8 | 25.1 | 23.7 | 22.9 | 2.220 | 3.3% | 31.2 | 55.3 | 62.7 |
| | 0.25 | 0.415 | 24.7 | 25.5 | 24.8 | 23.6 | 2.226 | 3.1% | 34.9 | 56.7 | 59.0 |
| 14 | 0.2 | 0.427 | 24.2 | 24.9 | 23.5 | 22.4 | 2.245 | 3.9% | n.b. | - | - |

| | | | | | | | | | | | |
|---|---|---|---|---|---|---|---|---|---|---|---|
| (a) Dos. = Dosierung [Masse-% Polymer bezogen auf Zement] (b) W/Z-Wert = Wasser/Zement-Wert: Gibt die benötigte Wassermenge wieder, um bei konstanter Zementmenge einen fließfähigen Mörtel zu erzeugen. (c) Ausbreitmaß, bestimmt nach 0, 30, 60, und 90 min. (d) Gereinigte Probe: Ultrafiltration mit einer 10 kDa-Membran (e) Unfiltrierte Probe: Bei einem Feststoffgehalt von 100% liegen nach der Polymerisation etwa 79% polymeres Produkt und 21% niedermolekulare Bestandteile < 5.000 g/mol, wie z.B. Restmonomere, Salze u.a., vor. | | | | | | | | | | | |

**Tabelle 10**

| Betontests (Wassereduktionsvermögen, Slump-Erhalt und Druckfestigkeiten): a) geordnet nach dem bestem Wasserreduktionsvermögen (W/Z-Wert), und b) dem Erhalt der Fließfähigkeit über die Zeit (Slump-Erhalt) | | | | | | | | | | | | |
|---|---|---|---|---|---|---|---|---|---|---|---|---|
| Polymer Nr. | Dos.^{(a)} | W/Z- Wert | Ausbreitmaß^{(b)} [cm] | | | | | Frischbetonrohdichte | Luftporengehalt | Druckfestigkeit [N/mm²] | | |
| | | | 0' | 10' | 40' | 60' | 90' | | | 1d | 7d | 28d |
| Wasser | - | 0.63 | 59.0 | 60.5 | 57.5 | 57.5 | 55.0 | 2.389 | 2.4% | 15.4 | 36.5 | 42.9 |
| Water reducer | | | | | | | | | | | | |
| Glenium 51 | 0.2 | 0.49 | 59.5 | 60.5 | 57.5 | 56.0 | 51.0 | 2.477 | 1.8% | 33.0 | 55.5 | 65.3 |
| 3 | 0.2 | 0.42 | 55.0 | 47.5 | 36.5 | - | - | 2.462 | 3.0% | 42.4 | 63.8 | 70.0 |
| 2 | 0.2 | 0.44 | 50.0 | 42.5 | 36.5 | - | - | 2.440 | 2.4% | 36.4 | 60.3 | 69.4 |
| 24 | 0.2 | 0.44 | 56.5 | 46.0 | 36.5 | - | - | 2.432 | 2.1% | 35.2 | 57.5 | 64.0 |
| 13a | 0.2 | 0.45 | 57.5 | 52.0 | 45.0 | 42.0 | - | 2.442 | 2.1% | 38.2 | 58.1 | 66.5 |
| 13b | 0.2 | 0.46 | 60.0 | 54.0 | 47.5 | 42.0 | - | 2.429 | 1.7% | 36.0 | 59.8 | 66.8 |
| 6 | 0.2 | 0.46 | 60.5 | 58.0 | 57.0 | 55.5 | 52.5 | 2.429 | 1.5% | 31.6 | 58.9 | 68.1 |
| 5 | 0.2 | 0.47 | 58.0 | 48.5 | 40.5 | 40.0 | - | 2.459 | 2.5% | 31.9 | 56.3 | 62.9 |
| 27 | 0.2 | 0.47 | 58.0 | 56.0 | 50.5 | 47.0 | 41.5 | 2.421 | 1.8% | 31.1 | 54.5 | 62.7 |
| 10 | 0.2 | 0.48 | 58.0 | 50.0 | 43.0 | 41.0 | - | 2.428 | 1.8% | 31.4 | 53.0 | 60.5 |
| 22 | 0.2 | 0.48 | 61.0 | 52.0 | 41.0 | - | - | 2.454 | 2.6% | 28.8 | 54.0 | 62.7 |
| 1 | 0.2 | 0.49 | 63.0 | 56.5 | 49.5 | 47.5 | 43.0 | 2.425 | 1.6% | 26.6 | 51.9 | 60.1 |
| 4 | 0.2 | 0.49 | 58.5 | 51.0 | 46.0 | 45.0 | 42.5 | 2.412 | 2.4% | 25.1 | 52.0 | 60.9 |
| 17 | 0.2 | 0.49 | 57.0 | 54.5 | 49.0 | 47.5 | 46.0 | 2.408 | 1.9% | 26.1 | 56.3 | 62.0 |
| 18 | 0.2 | 0.50 | 58.0 | 53.5 | 48.0 | 48.0 | 45.5 | 2.423 | 1.7% | 25.6 | 51.0 | 58.5 |
| 9 | 0.2 | 0.50 | 62.5 | 60.0 | 55.0 | 51.5 | 49.0 | 2.428 | 1.3% | 29.3 | 54.6 | 60.8 |
| 21 | 0.2 | 0.51 | 57.5 | 53.0 | 48.0 | 46.0 | - | 2.439 | 2.2% | 23.0 | 48.9 | 54.2 |
| 23 | 0.2 | 0.51 | 62.0 | 53.5 | 48.0 | 46.0 | 41.5 | 2.425 | 1.7% | 24.8 | 47.9 | 55.6 |
| 26 | 0.2 | 0.51 | 61.5 | 56.0 | 50.5 | 47.5 | 44.0 | 2.415 | 2.0% | 21.7 | 50.0 | 55.3 |
| 31 | 0.2 | 0.51 | 56.5 | 57.0 | 53.0 | 49.0 | 45.0 | 2.421 | 1.8% | 21.6 | 46.7 | 54.2 |
| 7 ^{(d)} | 0.2 | 0.52 | 61.0 | 60.0 | 59.0 | 54.5 | 50.5 | 2.384 | 1.9% | 21.0 | 45.2 | 52.0 |
| 14 | 0.2 | 0.52 | 59.5 | 58.0 | 54.5 | 52.0 | 49.0 | 2.455 | 2.0% | 21.1 | 47.3 | 55.7 |
| 29 | 0.2 | 0.53 | 59.0 | 56.0 | 54.0 | 54.0 | 51.5 | 2.440 | 2.1% | 21.3 | 47.2 | 57.4 |
| 11 | 0.2 | 0.54 | 60.5 | 59.0 | 56.0 | 48.0 | 45.5 | 2.387 | 1.6% | 19.2 | 41.7 | 51.2 |

| Slump retainer | | | | | | | | | | | | |
|---|---|---|---|---|---|---|---|---|---|---|---|---|
| Glenium 27 | 0.24 | 0.56 | 58.5 | 62.0 | 61.5 | 62.0 | 59.5 | 2.434 | 0.9% | 19.7 | 46.0 | 54.8 |
| 8 | 0.2 | 0.53 | 61.0 | 62.5 | 64.5 | 64.0 | 62.0 | 2.434 | 1.4% | 22.4 | 50.9 | 60.1 |
| 32 | 0.2 | 0.53 | 60.0 | 63.0 | 62.0 | 60.5 | 58.0 | 2.394 | 1.5% | 22.7 | 48.1 | 55.7 |
| 7 ^{(c)} | 0.2 | 0.49 | 59.5 | 60.0 | 62.0 | 60.0 | 56.0 | 2.413 | 1.6% | 28.2 | 53.3 | 63.7 |
| 28 | 0.2 | 0.52 | 58.0 | 57.5 | 60.0 | 59.0 | 54.0 | 2.416 | 1.7% | 24.4 | 52.1 | 59.2 |
| 19 | 0.2 | 0.53 | 59.0 | 57.0 | 55.5 | 55.5 | 54.0 | 2.413 | 1.2% | 23.8 | 50.4 | 59.1 |
| 30 | 0.2 | 0.59 | 58.5 | 57.0 | 56.0 | 55.0 | 53.5 | 2.410 | 2.3% | 13.8 | 40.5 | 47.9 |
| 20 | 0.2 | 0.57 | 61.5 | 59.5 | 58.5 | 57.0 | 55.5 | 2.397 | 1.3% | 19.1 | 44.3 | 49.3 |

| | | | | | | | | | | | | |
|---|---|---|---|---|---|---|---|---|---|---|---|---|
| (a) Dos. = Dosierung [Masse-% Polymer bezogen auf Zement] (b) Ausbreitmaß, bestimmt nach 0, 10, 40, 60, und 90 min. (c) Gereinigte Probe: Ultrafiltration mit einer 10 kDa-Membran (d) Unfiltrierte Probe: Bei einem Feststoffgehalt von 100% liegen nach der Polymerisation etwa 79% polymeres Produkt und 21% niedermolekulare Bestandteile < 5.000 g/mol, wie z.B. Restmonomere, Salze u.a., vor. | | | | | | | | | | | | |

## Patentansprüche

1. Copolymere auf Basis von Phosphor-haltigen Monomeren (A) von ungesättigten Dicarbonsäure-Derivaten der allgemeinen Formeln (Ia) und/oder (Ib) 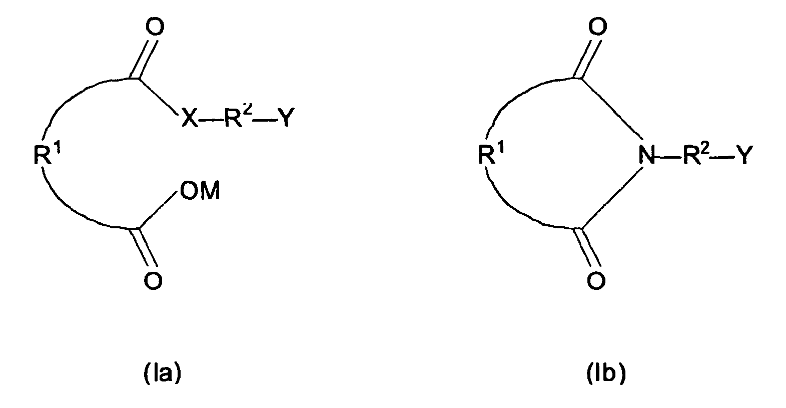 mit
R¹ = 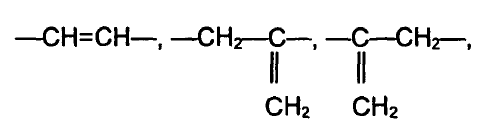 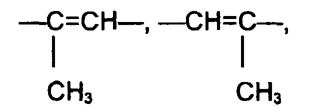
X = O, S, NH, N-R²-Y,
R² = C₁-C₂₀-(Hetero-)Alkylenreste ggf. mit O- oder N-Heteroatomen, die linear oder verzweigt sind und ggf. noch 1 bis 10 Substituenten ausgewählt aus der Gruppe OH, OPO₃M₂, OPHO₂M, NH₂, NH-CH₂PO₃M₂, N(CH₂-PO₃M₂)₂, CZ(PO₃M₂)₂ aufweisen, sowie C₆-C₁₀-Arylenreste,
Y = -N(CH₂-PO₃M₂)₂, -CZ(PO₃M₂)₂, -OPHO₂M, -OPO₃M₂,
Z = H, Hai, OH, NH₂,
Hal = F, Cl, Br, J,
M = H, Na, K, NH₄, N(R³)₄
R³ = C₁-C₁₂-Alkylreste sowie C₆-C₁₀-Arylreste
sowie
Makromonomeren (B) der allgemeinen Formel (II) 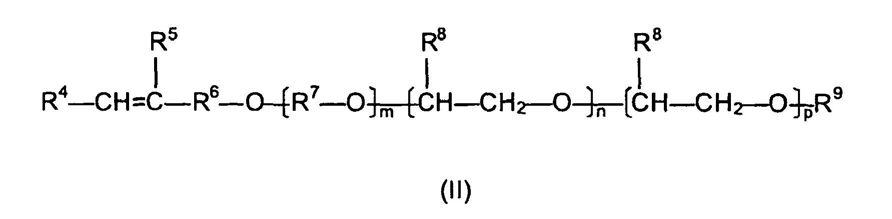 mit
R⁴ = H, C₁-C₂₀-Alkylreste,
R⁵ = H, CH₃,
R⁶ = Alkylenreste mit 0 bis 20 C-Atomen,
R⁷ = C₁-C₂₀-Alkylenreste,
R⁸ = H, C₁-C₂₀-Alkylreste,
R⁹ = H, C₁-C₂₀-Alkylreste, C₆-C₁₀-Arylreste, COR³, NO₂M, SO₃M, PO₃M₂,
m = 0 bis 10,
n = 1 bis 300,
p = 0 bis 300
und wobei
R³ und M oben genannte Bedeutung besitzen.

2. Copolymere nach Anspruch 1, **dadurch gekennzeichnet, dass** die Copolymere auf Basis der Monomere (A) und (B) noch Bausteine auf Basis der Monomere (C) gemäß den allgemeinen Formeln (IIIa) und (IIIb) enthalten 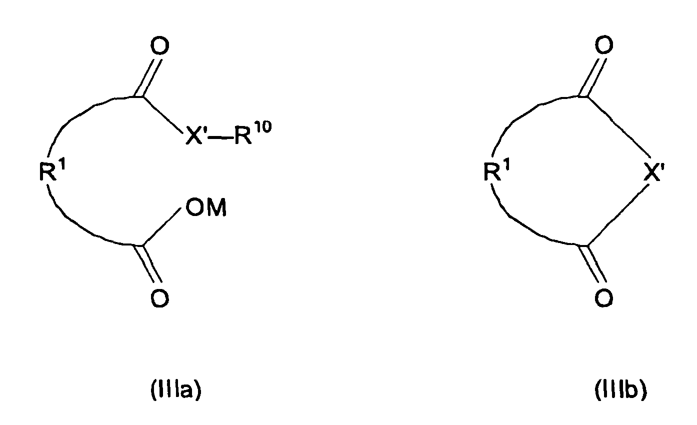 wobei
X' = O, S, NH, NR¹⁰,
R¹⁰ = H, C₁-C₂₀-(Hetero-)Alkylreste ggf. mit O- oder N-Heteroatomen, die linear oder verzweigt sind und ggf. 1 bis 10 OH- und/oder NH₂-Gruppen aufweisen, sowie C₆-C₁₀-Arylreste
darstellen und
R¹ und M oben genannte Bedeutung besitzen.

3. Copolymere nach Anspruch 1 oder 2, **dadurch gekennzeichnet, dass** die Copolymere auf Basis der Monomere (A) und (B) und ggf. (C) noch Bausteine auf Basis der Monomere (D) gemäß der allgemeinen Formel (IV) enthalten 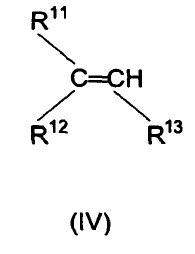 wobei
R¹¹ = H, R¹⁰, (CH₂)ᵣOR¹⁰, O(C=O)R¹⁰,
R¹², R¹³ = H, C₁-C₂₀-Alkylreste oder C₆-C₁₀-Arylreste und
r = 0 bis 10 darstellen und
R¹⁰ oben genannte Bedeutung besitzt.

4. Copolymere nach einem der Ansprüche 1 bis 3, **dadurch gekennzeichnet, dass** die Copolymere auf Basis der Monomere (A) und (B) sowie ggf. (C) und (D) noch Bausteine auf Basis der Monomere (E) gemäß der allgemeinen Formel (V) enthalten 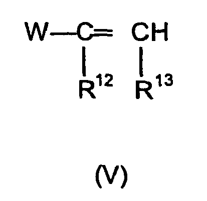 wobei
W = CN, CO-R¹⁴,
R¹⁴ = H, OM, OR¹⁰, NHR¹⁰, N(R¹⁰)₂, SR¹⁰ darstellen und
R¹⁰, R¹², R¹³ sowie M oben genannte Bedeutung besitzen.

5. Copolymere nach einem der Ansprüche 1 bis 4, **dadurch gekennzeichnet, dass** das molare Verhältnis von Monomer (A) zu Monomer (B) im Copolymer 2 : 1 bis 1 : 2 beträgt.

6. Copolymere nach einem der Ansprüche 1 bis 5, **dadurch gekennzeichnet, dass** im Copolymer auf Basis der Monomere (A) und (B) bis zu 90 Mol-% von Monomer (A) durch Monomer (C) ersetzt sind.

7. Copolymere nach einem der Ansprüche 1 bis 6, **dadurch gekennzeichnet, dass** im Copolymer auf Basis der Monomere (A) und (B) bis zu 90 Mol-% des Monomers (B) durch das Monomer (D) ersetzt sind.

8. Copolymere nach einem der Ansprüche 1 bis 7, **dadurch gekennzeichnet, dass** im Copolymer auf Basis der Monomere (A) und (B) bis zu 90 Mol-% der Monomere (A) und (B) durch die Monomere (C) und (D) ersetzt sind.

9. Copolymere nach einem der Ansprüche 1 bis 8, **dadurch gekennzeichnet, dass** das Copolymer auf Basis der Monomere (A) und (B) sowie ggf. (C) und (D) noch bis zu 10 Molequivalente eines oder mehrerer Monomere (E), bezogen auf die Summe der Monomere (A) und (B) sowie ggf. (C) und (D), enthält.

10. Verfahren zur Herstellung der Copolymere nach einem der Ansprüche 1 bis 9, **dadurch gekennzeichnet, dass** die Monomere (A) und (B) sowie ggf. (C) und (D) einer radikalischen Polymerisation unterworfen werden.

11. Verfahren nach Anspruch 10, **dadurch gekennzeichnet, dass** man die radikalische Polymerisation im wässrigen System im Temperaturbereich von - 10 bis 100 °C durchführt.

12. Verfahren nach Anspruch 10 oder 11, **dadurch gekennzeichnet, dass** man die Radikale durch thermische Zersetzung von geeigneten Peroxo- oder Azoinitiatoren, photochemisch oder durch Verwendung eines Redoxsystems erzeugt.

13. Verfahren nach Anspruch 12, **dadurch gekennzeichnet, dass** man wasserlösliche Azoinitiatoren einsetzt.

14. Verfahren nach einem der Ansprüche 10 bis 13, **dadurch gekennzeichnet, dass** man die radikalische Polymerisation mit Hilfe eines Redoxsystems, bestehend aus Wasserstoffperoxid, Eisen(II)sulfat und einem Reduktionsmittel im Temperaturbereich von 0 bis 30 °C durchführt.

15. Verfahren nach einem der Ansprüche 10 bis 14, **dadurch gekennzeichnet, dass** die photochemische oder Redoxradikal-Erzeugung bei Temperaturen zwischen 0 und 30 °C erfolgt.

16. Verwendung der Copolymere nach einem der Ansprüche 1 bis 10 als Zusatzmittel für anorganische Bindemittelsuspensionen auf Basis von Zement, Kalk, Gips oder Anhydrit.

17. Verwendung nach Anspruch 16, **dadurch gekennzeichnet, dass** das Copolymer in einer Menge von 0,01 bis 10 Gew.-%, insbesondere 0,05 bis 5 Gew.-%, bezogen auf das Gewicht des anorganischen Bindemittels, eingesetzt wird.

18. Verwendung nach einem der Ansprüche 16 bis 17, **dadurch gekennzeichnet, dass** das Copolymer als Fließmittel bzw. Wasserreduktionsmittel eingesetzt wird.

## Claims

1. Copolymers based on phosphorus-containing monomers (A) of unsaturated dicarboxylic acid derivatives of the general formulae (Ia) and/or (Ib) 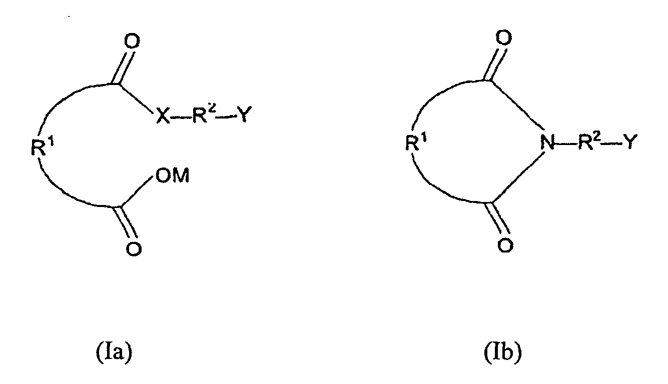 in which
R¹ = 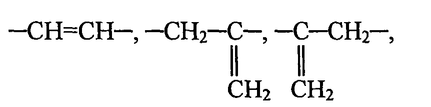 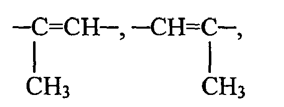
X = O, S, NH, N-R²-Y
R² = C₁-C₂₀ (hetero) alkylene residues optionally containing O- or N-heteroatoms, which are linear or branched and optionally also have 1 to 10 substituents selected from the group comprising OH, OPO₃M₂, OPHO₂M, NH₂, NH-CH₂PO₃M₂, N(CH₂-PO₃M₂)₂, CZ(PO₂M₂)₂, as well as C₆-C₁₀ arylene residues,
Y = -N(CH₂-PO₃M₂)₂, -CZ(PO₂M₂)₂, -OPHO₂M, -OPO₃M₂,
Z = H, Hal, OH, NH₂
Hal = F, Cl, Br, I,
M = H, Na, K, NH₄, N(R³)₄
R³ = C₁-C₁₂ alkyl residues as well as C₆-C₁₀ aryl residues
and
macromonomers (B) of the general formula (II) 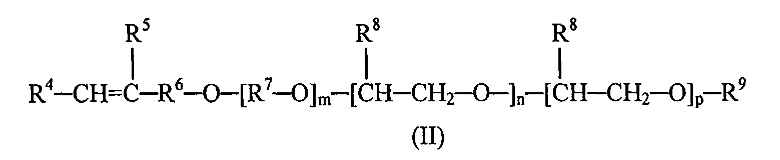 in which
R⁴ = H, C₁-C₂₀ alkyl residues,
R⁵ = H, CH₃,
R⁶ = alkylene residues containing 0 to 20 C atoms,
R⁷ = C₁-C₂₀ alkyl residues,
R⁸ = H, C₁-C₂₀ alkyl residues,
R⁹ = H, C₁-C₂₀ alkyl residues, C₆-C₁₀ aryl residues, COR³, NO₂M, SO₃M, PO₃M₂,
m = 0 to 10,
n = 1 to 300,
p = 0 to 300
and
R³ and M have the above-mentioned meaning.

2. Copolymers according to claim 1, **characterized in that** the copolymers based on the monomers (A) and (B) additionally contain building blocks based on the monomers (C) according to the general formulae (IIIa) and (IIIb) 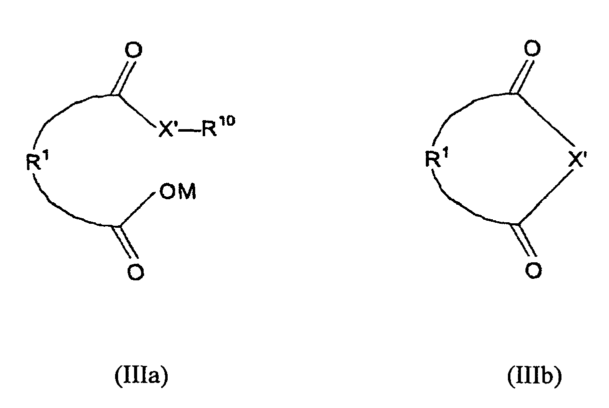 in which
X' = O, S, NH, NR¹⁰,
R¹⁰ = H, C₁-C₂₀ (hetero)alkyl residues optionally containing O- or N-heteroatoms, which are linear or branched and optionally have 1 to 10 OH and/or NH₂ groups, as well as C₆-C₁₀ aryl residues
and
R¹ and M have the above-mentioned meaning.

3. Copolymers according to claim 1 or 2, **characterized in that** the copolymers based on the monomers (A) and (B) and optionally (C) additionally contain building blocks based on the monomers (D) according to the general formula (IV) 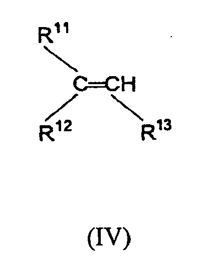 in which
R¹¹ = H, R¹⁰, (CH₂)ᵣOR¹⁰, O(C=O)R¹⁰,
R¹², R¹³ = H, C₁-C₂₀ alkyl residues or C₆-C₁₀ aryl residues and
r = 0 to 10 and
R¹⁰ has the above-mentioned meaning.

4. Copolymers according to one of the claims 1 to 3, **characterized in that** the copolymers based on the monomers (A) and (B) and optionally (C) and (D) additionally contain building blocks based on the monomers (E) according to the general formula (V) 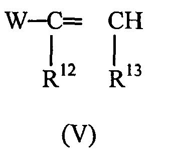 in which
W = CN, CO-R¹⁴,
R¹⁴ = H, OM, OR¹⁰, NHR¹⁰, N(R¹⁰)₂, SR¹⁰ and
R¹⁰, R¹², R¹³ and M have the above-mentioned meanings.

5. Copolymers according to one of the claims 1 to 4, **characterized in that** the molar ratio of monomer (A) to monomer (B) in the copolymer is 2 : 1 to 1 : 2.

6. Copolymers according to one of the claims 1 to 5, **characterized in that** up to 90 mole % of monomer (A) is replaced by monomer (C) in the copolymer based on the monomers (A) and (B).

7. Copolymers according to one of the claims 1 to 6, **characterized in that** up to 90 mole % of monomer (B) is replaced by monomer (D) in the copolymer based on the monomers (A) and (B).

8. Copolymers according to one of the claims 1 to 7, **characterized in that** up to 90 mole % of the monomers (A) and (B) is replaced by the monomers (C) and (D) in the copolymer based on the monomers (A) and (B).

9. Copolymers according to one of the claims 1 to 8, **characterized in that** the copolymer based on the monomers (A) and (B) as well as optionally (C) and (D) additionally contains up to 10 mole equivalents of one or more monomers (E) based on the sum of the monomers (A) and (B) and optionally (C) and (D).

10. Process for producing copolymers according to one of the claims 1 to 9, **characterized in that** the monomers (A) and (B) and optionally (C) and (D) are subjected to a free-radical polymerization.

11. Process according to claim 10, **characterized in that** the free-radical polymerization is carried out in an aqueous system in a temperature range of -10 to 100°C.

12. Process according to claim 10 or 11, **characterized in that** the radicals are produced by thermal decomposition of suitable peroxo- or azoinitiators, photochemically or by using a redox system.

13. Process according to claim 12, **characterized in that** water-soluble azoinitiators are used.

14. Process according to one of the claims 10 to 13, **characterized in that** the free-radical polymerization is carried out with the aid of a redox system consisting of hydrogen peroxide, iron(II)sulphate and a reducing agent in a temperature range of 0 to 30°C.

15. Process according to one of the claims 10 to 14, **characterized in that** the photochemical or redox radical production is carried out at temperatures between 0 and 30°C.

16. Use of the copolymers according to one of the claims 1 to 10 as additives for inorganic binder suspensions based on cement, lime, gypsum or anhydrite.

17. Use according to claim 16, **characterized in that** the copolymer is used in an amount of 0.01 to 10 % by weight and in particular 0.05 to 5 % by weight based on the weight of the inorganic binding agent.

18. Use according to one of the claims 16 to 17, **characterized in that** the copolymer is used as a superplasticizer or water reducer.

## Revendications

1. Copolymères à base de monomères (A) dérivés d'acide dicarboxylique insaturés contenant du phosphore de formule générale (Ia) et/ou (Ib) 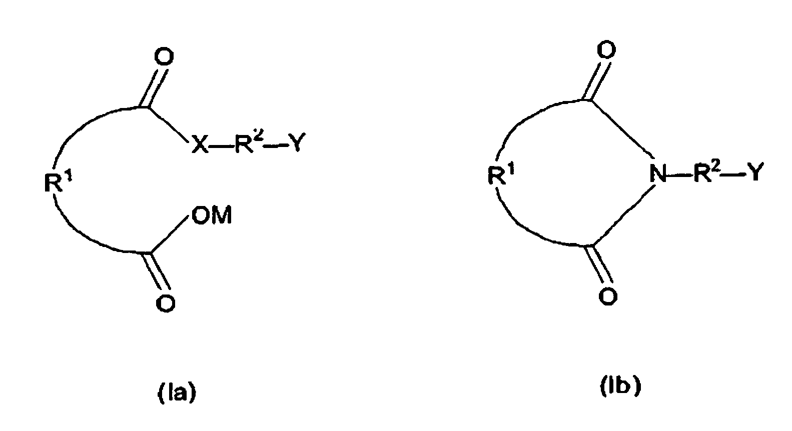 dans lesquelles
**R¹ =** 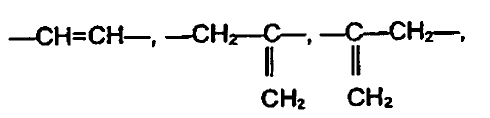 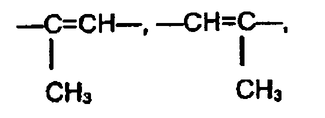 X = O, S, NH, N-R²-Y,
R² = groupes (hétéros)alkylène en C₁ à C₂₀ ayant éventuellement des hétéroatomes O ou N, linéaires ou ramifiés et présentant éventuellement 1 à 10 substituants choisis dans le groupe constitué par OH, OPO₃M₂, OPHO₂M, NH₂, NH-CH₂PO₃M₂, N(CH₂-PO₃M₂)₂, CZ(PO₃M₂)₂, ainsi que des groupes arylène en C₆ à C₁₀,
Y = -N(CH₂-PO₃M₂)₂, -CZ(PO₃M₂)₂, -OPHO₂M, -OPO₃M₂,
Z = H, Hal, OH, NH₂,
Hal = F, Cl, Br, J,
M = H, Na, K, NH₄, N(R³)₄,
R³ = groupes alkyle en C₁ à C₁₂ ainsi que des groupes aryle en C₆ à C₁₀
et
des macromonomères (B) de formule générale (II) 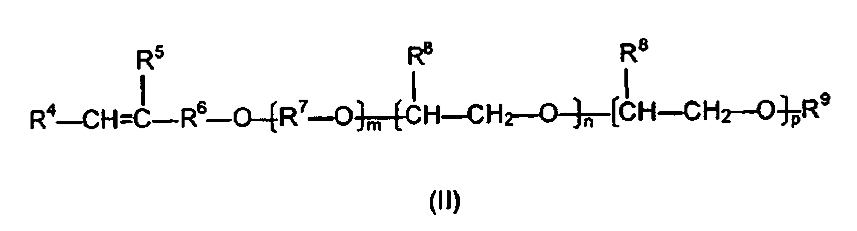 dans laquelle
R⁴ = H, groupes alkyle en C₁ à C₂₀,
R⁵ = H, CH₃,
R⁶ = groupes alkylène ayant 0 à 20 atomes de carbone,
R⁷ = groupes alkylène en C₁ à C₂₀,
R⁸ = H, groupes alkyle en C₁ à C₂₀,
R⁹ = H, groupes alkyle en C₁ à C₂₀, groupes aryle en C₆ à C₁₀, COR³, NO₂M, SO₃M,
PO₃M₂,
m = 0 à 10,
n = 1 à 300,
p = 0 à 300
et
R³ et M ayant les significations mentionnées ci-dessus.

2. Copolymères selon la revendication 1, **caractérisé en ce que** les copolymères à base de monomères (A) et (B) comprennent également des éléments à base de monomères (C) répondant aux formules générales (IIIa) et (IIIb) 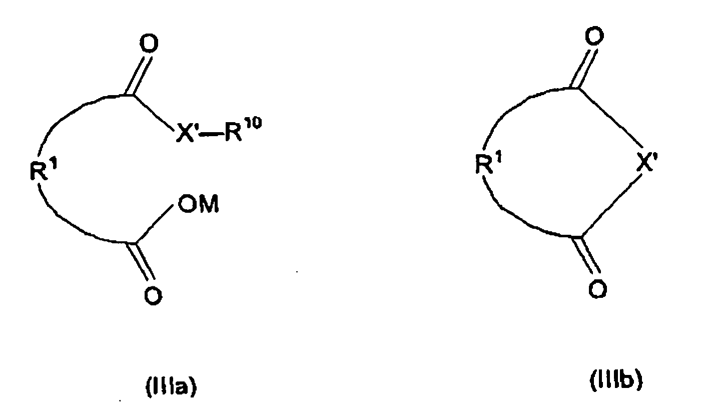 dans lesquelles
X' = O, S, NH, NR¹⁰,
R¹⁰ = H, groupes (hétéros)alkyle en C₁ à C₂₀ ayant éventuellement des hétéroatomes O ou N, linéaires ou ramifiés et présentant le cas échéant 1 à 10 groupes OH et/ou NH₂, ainsi que des groupes aryle en C₆ à C₁₀
et
R¹ et M ayant les significations mentionnées ci-dessus.

3. Copolymères selon la revendication 1 ou 2, **caractérisés en ce que** les copolymères à base de monomères (A) et (B) et éventuellement (C) comprennent également des éléments à base de monomères (D) répondant à la formule générale (IV) 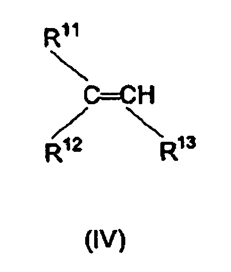 dans laquelle
R¹¹ = H, R¹⁰, (CH₂)ᵣOR¹⁰, O(C=O)R¹⁰,
R¹², R¹³ = H, groupes alkyle en C₁ à C₂₀ ou groupes aryle en C₆ à C₁₀ et
r = 0 à 10 et
R¹⁰ a la signification mentionnée ci-dessus.

4. Copolymères selon l'une quelconque des revendications 1 à 3, **caractérisés en ce que** les copolymères à base de monomères (A) et (B) ainsi qu'éventuellement (C) et (D) comprennent également des éléments à base de monomères (E) répondant à la formule générale (V) 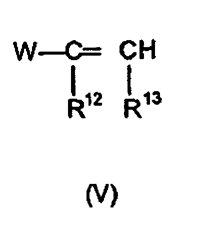 dans laquelle
W = CN, CO-R¹⁴,
R¹⁴ = H, OM, OR¹⁰, NHR¹⁰, N(R¹⁰)₂, SR¹⁰ et
R¹⁰, R¹², R¹³ ainsi que M ont les significations mentionnées ci-dessus.

5. Copolymères selon l'une quelconque des revendications 1 à 4, **caractérisés en ce que** le rapport molaire du monomère (A) sur le monomère (B) dans le copolymère est de 2 : 1 à 1 : 2.

6. Copolymères selon l'une quelconque des revendications 1 à 5, **caractérisés en ce que** dans le copolymère à base de monomères (A) et (B), jusqu'à 90 % en mol du monomère (A) est remplacé par le monomère (C).

7. Copolymères selon l'une quelconque des revendications 1 à 6, **caractérisés en ce que** dans le copolymère à base de monomères (A) et (B), jusqu'à 90 % en mol du monomère (B) est remplacé par le monomère (D).

8. Copolymères selon l'une quelconque des revendications 1 à 7, **caractérisés en ce que** dans le copolymère à base de monomères (A) et (B), jusqu'à 90 % en mol des monomères (A) et (B) est remplacé par les monomères (C) et (D).

9. Copolymères selon l'une quelconque des revendications 1 à 8, **caractérisés en ce que** le copolymère à base de monomères (A) et (B) ainsi qu'éventuellement (C) et (D) contiennent également jusqu'à 10 équivalents en mole d'un ou plusieurs monomères (E), par rapport à la somme de monomères (A) et (B) ainsi qu'éventuellement (C) et (D).

10. Procédé de préparation des copolymères selon les revendications 1 à 9, **caractérisé en ce que** les monomères (A) et (B) ainsi que le cas échéant (C) et (D) sont soumis à une polymérisation radicalaire.

11. Procédé selon la revendication 10, **caractérisé en ce que** la polymérisation radicalaire peut être réalisée dans un système aqueux dans une gamme de températures de -10 à 100 °C.

12. Procédé selon la revendication 10 ou 11, **caractérisé en ce que** les radicaux peuvent être produits par décomposition thermique d'amorceurs de type peroxyde ou azoïques appropriés, par voie photochimique ou par utilisation d'un système d'oxydoréduction.

13. Procédé selon la revendication 12, **caractérisé en ce que** des amorceurs azoïques solubles dans l'eau sont employés.

14. Procédé selon l'une quelconque des revendications 10 à 13, **caractérisé en ce que** la polymérisation radicalaire est réalisée à l'aide d'un système d'oxydoréduction, constitué de peroxyde d'hydrogène, de sulfate de fer (II) et d'un agent de réduction dans une gamme de températures de 0 à 30 °C.

15. Procédé selon l'une quelconque des revendications 10 à 14, **caractérisé en ce que** la production de radicaux par voie photochimique ou par oxydoréduction a lieu à des températures comprises entre 0 et 30 °C.

16. Utilisation des copolymères selon l'une quelconque des revendications 1 à 10 en tant qu'additif pour des suspensions de liants inorganiques à base de ciment, de calcaire, de gypse et d'anhydrite.

17. Utilisation selon la revendication 16, **caractérisée en ce que** le copolymère est utilisé en une quantité de 0,01 à 10 % en poids, en particulier 0,05 à 5 % en poids, par rapport au poids du liant.

18. Utilisation selon l'une quelconque des revendications 16 à 17, **caractérisée en ce que** le copolymère est utilisé en tant que fluidifiant et/ou agent de réduction des eaux.
